(19) Europäisches Patentamt
European Patent Office
Office européen des brevets

(11) **EP 4 485 337 A1**

(12) **EUROPEAN PATENT APPLICATION**
published in accordance with Art. 153(4) EPC

(43) Date of publication:
**01.01.2025 Bulletin 2025/01**

(21) Application number: **23759773.7**

(22) Date of filing: **14.02.2023**

(51) International Patent Classification (IPC):
**G06Q 50/06** (2024.01)    **G06Q 10/04** (2023.01)

(52) Cooperative Patent Classification (CPC):
**G06Q 10/04; G06Q 50/06**

(86) International application number:
**PCT/JP2023/004917**

(87) International publication number:
**WO 2023/162771 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2022 JP 2022030042**

(71) Applicant: **Sustech Inc.**
**Tokyo 105-0014 (JP)**

(72) Inventors:
• **TANNO Yusuke**
**Tokyo 105-0014 (JP)**
• **OHASHI Akifumi**
**Tokyo 105-0014 (JP)**

(74) Representative: **RGTH**
**Patentanwälte PartGmbB**
**Neuer Wall 10**
**20354 Hamburg (DE)**

(54) **INFORMATION PROCESSING DEVICE, INFORMATION PROCESSING METHOD, AND PROGRAM**

(57)    The purpose of the present invention is to maximize profits comprehensively, including supply and demand of electric power and household consumption thereof. A service provider server 1 according to an embodiment comprises a trade price acquisition unit 101, a trade price prediction unit 102, a user consumption prediction unit 103, an electric power usage determination unit 104, and a control unit 105. The electric power usage determination unit 104 determines an electric power usage pattern of a user on the basis of a current trade price acquired by the trade price acquisition unit 101, a predicted household consumption amount predicted by the user consumption prediction unit 103, a predicted trade price predicted by the trade price prediction unit 102, and a predetermined rule aimed at maximizing the user's profit. The control unit 105 controls the user's electric power usage on the basis of the determined usage pattern. Thus, the above-described problem is solved.

FIG. 4

EP 4 485 337 A1

**Description**

TECHNICAL FIELD

The present invention relates to an information processing device, an information processing method, and a program.

BACKGROUND ART

Conventionally, there has been a first conventional technique for creating an operation plan for an electric power generator and a transaction plan in a supply-and-demand adjustment market for minimizing a difference between profit and loss based on a spot price, an adjustment capacity price, an adjustment capacity triggering ratio, and a fuel price, for example (see Patent Document 1, for example). Furthermore, there has been a second conventional technique for calculating an expected value for profit for each of both a wholesale electricity power market and a supply-and-demand adjustment market to determine a bid amount in each of the markets (see Patent Document 2, for example).

Citation List

Patent Document

Patent Document 1: Japanese Unexamined Patent Application, Publication No. 2021-136832
Patent Document 2: Japanese Unexamined Patent Application, Publication No. 2021-174344

DISCLOSURE OF THE INVENTION

Problems to be Solved by the Invention

However, conventional techniques including the first conventional technique and the second conventional technique described above are merely aimed at maximizing profit on the premise of selling generated electric power wholly, and there has been no technique for maximizing profit comprehensively, including consideration of supply and demand and self-consumption of electric power.
In view of the situations described above, an object of the present invention is to maximize profit comprehensively, including consideration of supply and demand and self-consumption of electric power.

Means for Solving the Problems

To achieve the object described above, an information processing device according to an aspect of the present invention includes:

a trade price acquisition unit for acquiring, as a current trade price, a current price at which a user trades electric power in each of a plurality of electric power trade markets;
a trade price prediction unit for predicting, as a predicted trade price, a price at which the user trades electric power in a future predetermined time period in each of the plurality of electric power trade markets;
a user consumption prediction unit for predicting, as a predicted amount of self-consumption, an electric power amount to be consumed by the user in a future predetermined time period;
an electric power usage determination unit for determining a usage pattern of electric power by the user based on the current trade price, the predicted amount of self-consumption, the predicted trade price, and a predetermined rule aimed at maximizing profit for the user; and
a control unit for controlling usage of electric power by the user based on the usage pattern that has been determined.

Furthermore, an information processing method and a program according to the aspect of the present invention are a method and a program corresponding to the information processing device according to the aspect of the present invention described above.

Effects of the Invention

According to the present invention, it is possible to maximize profit comprehensively, including consideration of supply and demand and self-consumption of electric power.

BRIEF DESCRIPTION OF THE DRAWINGS

FIG. 1 is a view illustrating an outline of a present service to which an information processing device according to an embodiment of the present invention is applied;
FIG. 2 is a block diagram illustrating an entire configuration of an information processing system for providing the present service illustrated in FIG. 1, the information processing system including the information processing device according to the embodiment of the present invention;
FIG. 3 is a block diagram illustrating a configuration of hardware of a service provider server in the information processing device according to the embodiment of the present invention, in the information processing system illustrated in FIG. 2;
FIG. 4 is a functional block diagram illustrating a functional configuration for executing processing regarding transaction of electric power among functional configurations of the service provider server having the hardware illustrated in FIG. 3;
FIG. 5 is a view illustrating an example of transition of a wholesale price of electric power in one day in a spot market for the information processing system illustrated in FIG. 2;
FIG. 6 is a flowchart for allowing the service provider server illustrated in FIG. 4 to perform optimum operation through analysis of markets including the spot market illustrated in FIG. 5;
FIG. 7 is a view illustrating an example of an algorithm structure of a time-series prediction model for allowing the service provider server illustrated in FIG. 4 to carry out processing according to the flowchart illustrated in FIG. 6;
FIG. 8 is a view illustrating an example of operation patterns in one week performed by the service provider server illustrated in FIG. 4;
FIG. 9 is a view illustrating another example of operation patterns performed by the service provider server illustrated in FIG. 4, and an example when a user performs operation of prioritizing self-consumption;
FIG. 10 is a view illustrating an outline of a second service to which an information processing system according to a second embodiment, which includes an information processing device according to the present invention, is applied;
FIG. 11 is a view illustrating an example of operation patterns in one week performed by a service provider server according to the second embodiment; and
FIG. 12 is a view illustrating another example of operation patterns in one week performed by the service provider server according to the second embodiment, and an example when a user performs operation of prioritizing self-consumption.

PREFERRED MODE FOR CARRYING OUT THE INVENTION

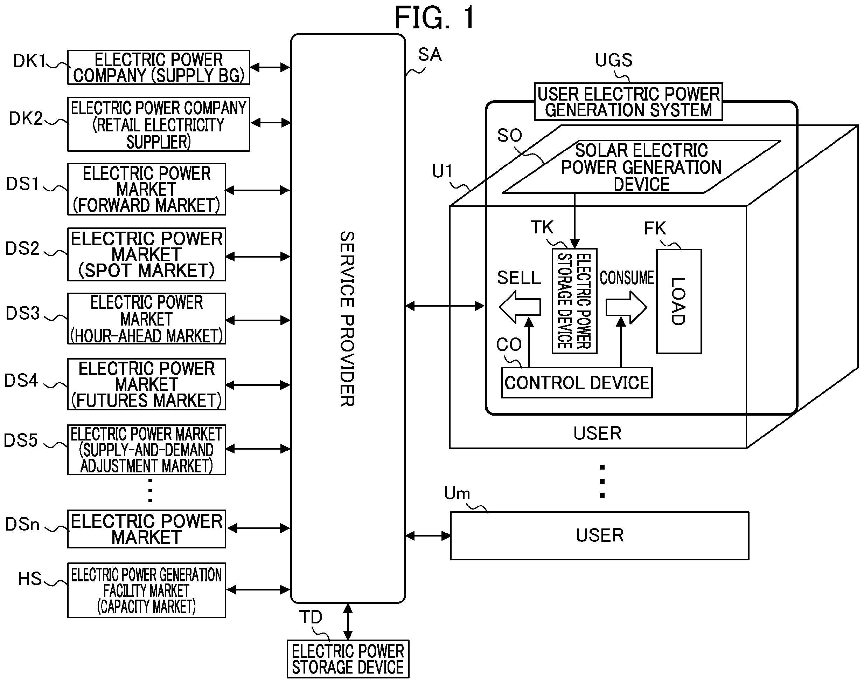

Embodiments of the present invention will now be described herein with reference to the accompanying drawings. A first service provided by an information processing system including an information processing device according to an embodiment of the present invention will now first be described with reference to FIG. 1. FIG. 1 is a view illustrating an outline of the first service to which the information processing device according to the embodiment of the present invention is applied.
As illustrated in FIG. 1, the first service is provided from a service provider SA to each of an m number of users U1 to Um (m is an integer value equal to or more than 1). The users U1 to Um are those (electric power demanders) who demand electric power to each run a business, for example. The electric power includes those supplied from electric power suppliers, described later, and recyclable energy consumed and generated by each of the users U1 to Um. That is, as the electric power suppliers in the first service, there are an electric power company DK1 having a balancing group, a retail electricity supplier DK2, an n number of electric power markets DS1 to DSn, and the users U1 to Um (n and m are independent integer values equal to or more than 1). The first service is a service in which the service provider SA serves as a mediator between the electric power suppliers as described above and the electric power demanders, that is, the users U1 to Um, "consumption", "trading", "storage", and "supply and demand adjustment" of electric power are combined with each other, and profit for each of the users U1 to Um in production and consumption of electric power and transaction (trading) of electric power is maximized.
The service provider SA mediates production of electric power in each of and transaction of electric power among the users U1 to Um. The service provider SA owns, for this purpose, an electric power storage device TD for storing electric power. The electric power storage device TD absorbs a time lag that occurs in transaction of electric power. By using the electric power storage device TD, it is possible to make a shift between a point in time when electric power has been generated and a point in time when electric power is self-consumed or sold, making it possible to improve profitability as a result. The electric power storage device TD is, for example, an electricity storage battery, a conversion device into a chemical substance such as hydrogen or ammonia, or a battery for an electric vehicle. Although, in this example, the electric power storage device TD exemplified is only one, a plurality of the electric power storage devices TD may be disposed in a dispersed manner, and the electric power storage device TD may be managed by a third party serving as a main management body. That is, for the electric power storage device TD, there is no limitation in number, its disposition, and, furthermore, its main management body.

The user Uk (k is a desired integer value ranging from 1 to m) is an electric power demander as described above, and runs its own business by demanding electric power supplied from an electric power supplier, for example. However, at least some of the users U1 to Um each have a facility that is able to produce recyclable energy and an electric power storage device TK, for example, to have an aspect of an electric power supplier. The recyclable energy includes those of, for example, solar electric power generation, wind electric power generation, biomass electric power generation, water electric power generation, geothermal electric power generation, wave electric power generation, and pumping-up hydraulic electric power generation. Specifically, the user U1 owns a user electric power generation system UGS for performing solar electric power generation, for example, as an example of recyclable energy. The user electric power generation system UGS includes a solar electric power generation device SO, the electric power storage device TK, and a control device CO, for example. In the user electric power generation system UGS, electric power generated by the solar electric power generation device SO is stored in the electric power storage device TK. The control device CO controls usage of electric power based on an instruction provided from the service provider SA whether electric power generated by the solar electric power generation device SO or electric power temporarily stored in the electric power storage device TK is allowed to be sold, via the service provider SA, to another party (for example, the electric power markets DS1 to DSn, and the electric power company (supply balancing group (BG)) DK1, the electric power company (retail electricity supplier) DK2, and another user Up (p is a desired integer value ranging from 2 to m) without interposing the electric power markets DS1 to DSn), or to be consumed in a load FK in the user U1. Note herein that the load FK is a facility (for example, a factory) for running the business, for example, of the user U1. That is, allowing the load FK to self-consume electric power unit by the user U1.

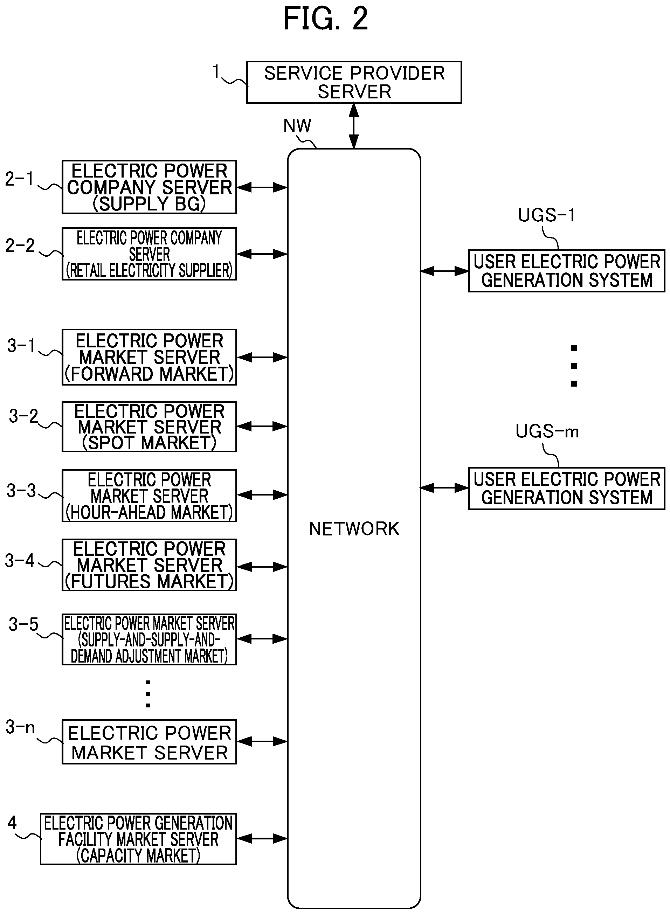

The service provider SA serves as a mediator using an electric power selling platform provided by a service provider server 1 illustrated in FIG. 2. The electric power selling platform uses artificial intelligence (AI), calculates a predicted electric power generation amount by each of the users U1 to Um every 30 minutes and for each electric power generation method, and provides the predicted electric power generation amount that has been calculated to the electric power company (supply BG) DK1 and the electric power company (retail electricity supplier) DK2. Furthermore, the electric power selling platform provides a platform that is able to optimally sell electric power that the user Uk has generated to each demander, determines whether electric power should be sold or procured, and automatically takes actions. The electric power selling platform performs, based on trends in the electric power markets DSn including the electric power market (forward market) DS1, the electric power market (spot market) DS2, the electric power market (hour-ahead market) DS3, the electric power market (futures market) DS4, and the electric power market (supply-and-demand adjustment market) DS5, for example, trading where profit through a difference between a purchase price and a selling price becomes highest. For example, the electric power selling platform executes processing for purchasing low-price electric power and storing the purchased low-price electric power in the electric power storage device TD, and selling the electric power when its price has increased.

Specifically, the service provider SA acquires, as a current trade price, a current price at which the user Uk trades electric power in each of the plurality of electric power trade markets DS1 to DSn. Furthermore, the service provider SA predicts, as a predicted amount of self-consumption, an electric power amount to be consumed by the user Uk in a future predetermined time period. The service provider SA further predicts, as a predicted trade price, a price at which the user Uk trades electric power in a future predetermined time period in each of the plurality of electric power trade markets DSn. The service provider SA determines a usage pattern of electric power by the user Uk based on the current trade price, the predicted amount of self-consumption, the predicted trade price, and a predetermined rule aimed at maximizing profit for the user Uk, and controls usage of electric power by the user Uk based on the determined usage pattern.

Note herein that usage of electric power by the user Uk includes, for example, "consumption" of electric power generated by the solar electric power generation device SO in the load FK in the own facility, transaction ("trading") of electric power including selling of electric power generated by the solar electric power generation device SO and purchasing of electric power from another provider, and "storage" of electric power in the electric power storage device TK.

The predetermined rule is a rule for combining "consumption", "trading", "storage", and "supply and demand adjustment" of electric power based on fluctuation of a current price, a future price, and a self-consumption amount to maximize profit for the user Uk. An example of the predetermined rule is a rule under which, electric power is purchased and stored at a stage where its price is low for use in self-consumption and selling, and when a private electric power generation amount also contributes to maximizing profit, the electric power is sold. Furthermore, another example of the predetermined rule is, for example, a rule under which, when electric power is to be sold, not only is the electric power sold at a highest price, but also a transaction cost (including, for example, a purchase price, a land use cost, an electric power decrease stored in the electric power storage device due to self-discharge of electricity, a consigned delivery cost when electric power is delivered on a system) and an imbalance cost (cost to pay imbalance price) are taken into account. As a result, it is possible to maximize profit for the user Uk through trading of electric power.

Next, the information processing system including the service provider server relating to the information processing device according to the embodiment of the present invention will now be described herein with reference to FIG. 2. FIG. 2 is a block diagram illustrating an entire configuration of the information processing system for providing the present service illustrated in FIG. 1, the information processing system including the information processing device according to the embodiment of the present invention.

The information processing system illustrated in FIG. 2 includes the service provider server 1 managed by the service provider SA, an electric power company server (supply BG) 2-1 and an electric power company server (retail electricity supplier) 2-2, electric power market servers 3-1 to 3-n, an electric power generation facility market server (capacity market) 4, and user electric power generation systems UGS-1 to UGS-m owned and managed by the users U1 to Um, respectively.

The service provider server 1, the electric power company server (supply BG) 2-1 and the electric power company server (retail electricity supplier) 2-2, the electric power market servers 3-1 to 3-n, the electric power generation facility market server (capacity market) 4, and the user electric power generation systems UGS-1 to UGS-m are coupled to each other via a network NW such as the Internet.

The user electric power generation systems UGS-1 to UGS-m each include, for example, the solar electric power generation device SO, the electric power storage device TK, and the control device CO, and are operated and managed by the users U1 to Um, respectively. Furthermore, as the users U1 to Um each enter into a usage contract for the electric power selling platform with the service provider SA, it is possible to achieve supply and demand control of electric power (whether produced electric power is to be sold or self-consumed, for example) and supply and demand adjustment through an instruction provided from the service provider server 1 to the control device CO.

The electric power company server (supply BG) 2-1 receives a result of prediction of an electric power generation amount from the service provider server 1 to perform supply and demand adjustment, and is operated by a person in charge in the electric power company DK1. The electric power company server (retail electricity supplier) 2-2 receives a result of prediction of a demand amount from the service provider server 1 to perform supply and demand adjustment, and is operated by a person in charge in the electric power company DK2. The electric power company server (supply BG) 2-1 and the electric power company server (retail electricity supplier) 2-2 communicate with the service provider server 1 to trade electric power produced by the user electric power generation systems UGS-1 to UGS-m (without interposing the electric power markets D1 to DSn). The electric power market servers 3-1 to 3-n provide places for transacting electric power serving as energy, such as a forward market, a spot market, an hour-ahead market, a futures market, and a supply-and-demand adjustment market. The electric power generation facility market server (capacity market) 4 provides a place for transacting supply capacity of electric power of an electric power generation facility. The electric power markets are the transaction markets DS1 to DSn for an electric power amount expressed by kWh (see FIG. 1). The capacity market is a transaction market for supply capacity expressed by kW. (See FIG. 1.)

Specifically, the electric power market server (forward market) 3-1 provides the electric power market (forward market) DS1 on the Internet. In the electric power market (forward market) DS1, transaction is performed before three days of actual supply and demand. The electric power market server (spot market) 3-2 provides the electric power market (spot market) DS2 on the Internet. In the electric power market (spot market) DS2, transaction is performed before a previous day of actual supply and demand. The electric power market server (hour-ahead market) 3-3 provides the electric power market (hour-ahead market) DS3 on the Internet. In the electric power market (hour-ahead market) DS3, transaction is performed before one hour of actual supply and demand, as a place for supply and demand adjustment for abnormal electric power generation and normal electric power generation in the day. The electric power market server (futures market) 3-4 provides the electric power market (futures market) DS4 on the Internet. In the electric power market (futures market) DS4, futures transaction for a maximum of 15 months is performed for hedging a future price fluctuation risk. The electric power market server 3-5 (supply-and-demand adjustment market) provides the electric power market (supply-and-demand adjustment market) DS5 on the Internet. In the electric power market (supply-and-demand adjustment market) DS5, transaction of adjustment capacity necessary for performing frequency control and supply and demand balance adjustment in an electric power supply area is performed. The electric power generation facility market server (capacity market) 4 provides an electric power generation facility market (capacity market) HS on the Internet. In the electric power generation facility market (capacity market) HS, transaction of supply capacity necessary in the future, which will be necessary for securing stable supply of electric power, is performed.

Note that the user electric power generation systems UGS-1 to UGS-m will be hereinafter collectively referred to as the "user electric power generation systems UGS", unless otherwise specifically distinguished from each other. Furthermore, the electric power market servers 3-1 to 3-n will be hereinafter collectively referred to as the "electric power market servers 3", unless otherwise specifically distinguished from each other.

The service provider server 1 manages operation of the user electric power generation systems UGS. The service provider server 1 executes various types and forms of processing for providing the functions described above of the user electric power generation systems UGS, the electric power company server (supply BG) 2-1, and the electric power company server 2-2 (retail electricity supplier). Furthermore, the service provider server 1 executes, on the electric power selling platform, trade processing of electric power that has been determined to be sold on the user electric power generation systems UGS, for the electric power company server (supply BG) 2-1, the electric power company server 2-2 (retail electricity supplier), and the electric power market servers 3.

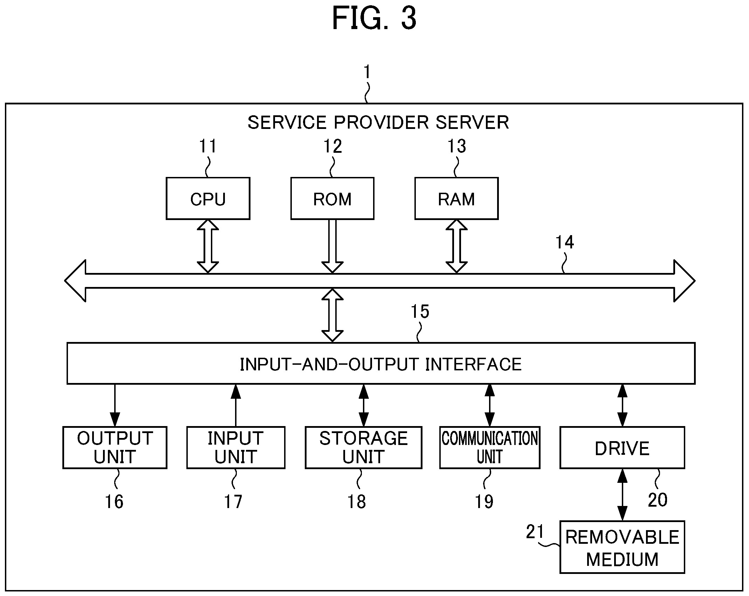

FIG. 3 is a block diagram illustrating a configuration of hardware of the service provider server in the information processing device according to the embodiment of the present invention, in the information processing system illustrated in FIG. 2.

The service provider server 1 includes a central processing unit (CPU) 11, a read only memory (ROM) 12, a random access memory (RAM) 13, a bus 14, an input-and-output interface 15, an output unit 16, an input unit 17, a storage unit 18, a communication unit 19, and a drive 20.

The CPU 11 executes various types of processing in accordance with a program recorded in the ROM 12 or a program loaded from the storage unit 18 to the RAM 13. The RAM 13 appropriately stores, for example, data necessary for the CPU 11 when executing various types of processing.

The CPU 11, the ROM 12, and the RAM 13 are coupled to each other via the bus 14. The bus 14 is further coupled to the input-and-output interface 15. The input-and-output interface 15 is coupled to the output unit 16, the input unit 17, the storage unit 18, the communication unit 19, and the drive 20.

The output unit 16 includes a display such as a liquid crystal display to display various types of images. The input unit 17 includes various types of hardware buttons, for example, for inputting various types of information in accordance with instruction operation of an operator.

The storage unit 18 includes a dynamic random access memory (DRAM), for example, to store various types of data. The communication unit 19 controls communication to be performed, via the network NW including the Internet, with another device (the user electric power generation systems UGS, the electric power company servers 2, the electric power market servers 3, and the electric power generation facility market server 4, for example, illustrated in FIG. 2).

The drive 20 is provided as required. The drive 20 is appropriately attached with a removable medium 21 such as a magnetic disk, an optical disk, a magnetic optical disk, or a semiconductor memory. A program read from the removable medium 21 by the drive 20 is installed into the storage unit 18 as required. Furthermore, the removable medium 21 is able to store various types of data stored in the storage unit 18, similar to the storage unit 18.

It is possible to execute various types of processing with the service provider server 1 described later through cooperation of various types of hardware and various types of software in the service provider server 1 illustrated in FIG. 3, as described above. As a result, the service provider SA is able to provide various types of services described later to the users U1 to Um.

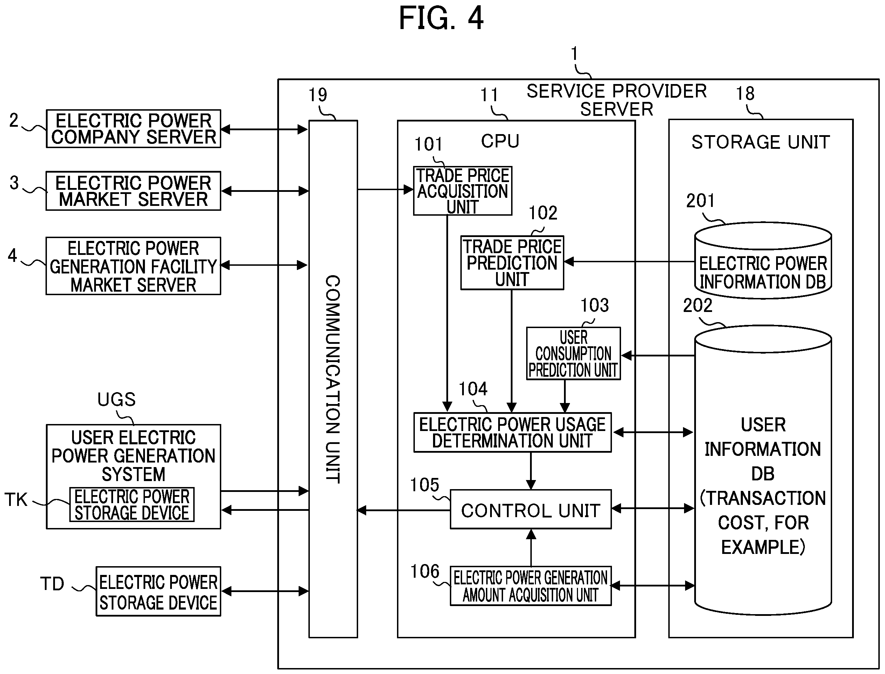

A functional configuration of the service provider server in the information processing system illustrated in FIG. 2 will now be described herein with reference to FIG. 4. FIG. 4 is a functional block diagram illustrating the functional configuration for executing processing regarding transaction of electric power among functional configurations in the configuration of the service provider server having the hardware illustrated in FIG. 3.

As illustrated in FIG. 4, an electric power information database (DB) 201 and a user information DB 202 are provided in a region in the storage unit 18 in the service provider server 1.

The electric power information DB 201 stores information regarding electric power, which is acquired from the electric power company servers 2, the electric power market servers 3, and the electric power generation facility market server 4, for example, and supply and demand and trading of supply capacity. For example, trade prices of electric power in past predetermined time periods in the electric power markets DSn (information of past actual trade results, for example) are stored. In addition, the electric power information DB 201 stores price scenario data representing price data in a forward market, price scenario data representing price data in a spot market, price scenario data representing price data in an hour-ahead market, price scenario data representing price data in a futures market, price scenario data representing price data in a supply-and-demand adjustment market, price scenario data representing price data in a capacity market, price scenario data representing price data of an imbalance cost, electric power generator data, and fuel price data, for example.

The user information DB 202 stores pieces of information of the users U1 to Um, respectively, and stores, as transaction cost information, information of a transaction cost regarding electric power by each of the users U1 to Um. Specifically, as the pieces of information of the users U1 to Um, respectively, a piece of transaction cost information for each of the users U1 to Um is stored. The transaction cost information includes, for the user U1, for example, transaction costs required in trading of electric power for the user U1, and a purchase price of the storage device TK, a land use cost, and a consigned delivery cost when electric power is delivered on a system.

Furthermore, when processing regarding trading of electric power is to be executed in the CPU 11 in the service provider server 1, as illustrated in FIG. 4, for example, a trade price acquisition unit 101, a trade price prediction unit 102, a user consumption prediction unit 103, an electric power usage determination unit 104, a control unit 105, and an electric power generation amount acquisition unit 106 function. The trade price acquisition unit 101 acquires, as a current trade price, a current price at which each of the users U1 to Um trades electric power in each of the plurality of electric power trade markets DSn. Specifically, the trade price acquisition unit 101 acquires, as a current trade price, for each of the electric power trade markets DSn, a current price at which each of the users U1 to Um trades electric power in each of the plurality of electric power trade markets DSn.

The trade price prediction unit 102 predicts, as a predicted trade price, a price at which each of the users U1 to Um trades electric power in a future predetermined time period in each of the plurality of electric power trade markets DSn. Specifically, the trade price prediction unit 102 refers to the electric power information DB 201, and, based on a trade price of electric power in a past predetermined time period in each of the electric power trade markets DSn, which is stored in the electric power information DB 201, predicts, as a predicted trade price, a price at which each of the users U1 to Um trades electric power in a future predetermined time period in each of the electric power trade markets DSn.

The user consumption prediction unit 103 predicts, as a predicted amount of self-consumption, an electric power amount to be consumed by each of the users U1 to Um in a future predetermined time period. Specifically, the user consumption prediction unit 103 refers to the user information DB 202, and predicts, as a predicted amount of self-consumption, an electric power amount to be consumed by each of the users U1 to Um in a future predetermined time period from past results of consumed electric power amounts by the user, which are stored in the user information DB 202. Furthermore, the user consumption prediction unit 103 takes into account an operation plan of each of the users U1 to Um and a result of prediction of future weather to predict a predicted amount of self-consumption. The user consumption prediction unit 103 further predicts a predicted amount of self-consumption based on a storage request provided from the control unit 105, an operation plan of the user, and a result of prediction of future weather.

The electric power usage determination unit 104 determines a usage pattern of electric power by each of the users U1 to Um based on the current trade price, the predicted amount of self-consumption, the predicted trade price, and a predetermined rule aimed at maximizing profit for each of the users U1 to Um. The electric power usage determination unit 104 further accesses the user information DB 202 in which information of a transaction cost regarding electric power by each of the users U1 to Um is stored as transaction cost information, takes into account the transaction cost information in those described above, and determines a usage pattern. Specifically, the electric power usage determination unit 104 determines a usage pattern based on the current trade price acquired by the trade price acquisition unit 101, the predicted amount of self-consumption predicted by the user consumption prediction unit 103, the predicted trade price predicted by the trade price prediction unit 102, the predetermined rule, and the transaction cost information in the user information DB 202. Note herein that the predetermined rule includes, for example, a rule for prioritizing, based on purchase prices, by each of the users U1 to Um, and durable years of an electric power generation facility and an electric power storage facility, acquisition of profit equivalent to the purchase prices.

A usage pattern includes a pattern for using an electric power storage facility that allows a predetermined electric power storage unit such as the electric power storage device TD to estimate a percentage of charged electric power in the electric power storage device TD to store, for vacant capacity for which it is possible to charge electric power, electric power provided from electric power provision sources including the users U1 to Um and the plurality of electric power markets DS1 to DSn, and to discharge and provide electric power to electric power provision destinations including the users U1 to Um and the plurality of electric power markets DS1 to DSn. Furthermore, the usage pattern includes a pattern for purchasing and storing, in the electric power storage device TD, electric power when a current trade price is a first price that has been set in advance in each of the predetermined electric power trade markets DS1 to DSn, and for using, when the predicted trade price is a second price that is higher than the first price, electric power discharged from the electric power storage device TD for self-consumption by each of the users U1 to Um or for selling in at least some of the plurality of electric power trade markets DS1 to DSn.

In addition, the electric power usage determination unit 104 adopts, as the predetermined rule, either a first rule aimed at maximizing profit for each of the users U1 to Um for each of a plurality of sites (each of factories) or a second rule aimed at maximizing profit for a group including the plurality of sites to determine a usage pattern. The electric power usage determination unit 104 adopts, as the predetermined rule, a rule for prioritizing, based on purchase prices, by each of the users U1 to Um, and durable years of an electric power generation facility (in the present embodiment, the solar electric power generation device SO, for example) and an electric power storage facility (for example, the electric power storage device TK), acquisition of profit equivalent to the purchase prices to determine a usage pattern. The electric power usage determination unit 104 further determines a usage pattern based on the state of charge in an electric power storage facility (for example, the electric power storage device TK) in accordance with a storage request from the control unit 105 and available battery capacity determined by taking into account a lowered capacity situation (a deteriorated situation of electric power storing capability) from initial capacity.

The control unit 105 controls usage of electric power by each of the users U1 to Um based on the usage pattern determined by the electric power usage determination unit 104. Specifically, the control unit 105 executes, as at least part of control for using electric power by each of the users U1 to Um, control for outputting a storage request to one or more of registered ones as electric power storage facilities capable of storing electric power (for example, the electric power storage device TD).

The electric power generation amount acquisition unit 106 acquires a result of prediction of an electric power generation amount at which electric power is to be generated in a future predetermined time period by an electric power generation facility (for example, the solar electric power generation device SO) owned by each of the users U1 to Um from a non-illustrated functional block in the service provider server 1 or another non-illustrated information processing device, and calculates, based on the result of the prediction, a predicted electric power generation amount serving as an index to be used for allowing the trade price prediction unit 102 to predict a predicted trade price and for allowing the electric power usage determination unit 104 to determine a usage pattern. That is, the trade price prediction unit 102 is able to highly accurately predict a predicted trade price by using a trade price of electric power in a past predetermined time period, and by further using a predicted electric power generation amount. Furthermore, the electric power usage determination unit 104 is able to highly accurately determine a usage pattern of electric power by using a current trade price, a predicted amount of self-consumption, a predicted trade price, and a predetermined rule aimed at maximizing profit for each of the users U1 to Um, and by further using a predicted electric power generation amount. As described above, a "predicted electric power generation amount" does not represent a "result of prediction" itself, but represents a name of an index acquired by processing the result of prediction (calculated based on the result of prediction). Specifically, for example, a predicted electric power generation amount is calculated as described below. That is, the electric power generation amount acquisition unit 106 is able to calculate, as a "predicted electric power generation amount", a value acquired by multiplying a result of prediction by a safety factor based on a "degree of a width of a confidence interval for a result of prediction" and an " occurrence possibility of an imbalance cost". Note herein that a degree of a width of a confidence interval for a result of prediction is set to, for example, a width of a confidence interval of $\pm 10\%$ with respect to a prediction value of a predicted electric power generation amount in a time period in which a degree of confidence (accuracy) of prediction is high or a width of a confidence interval of $\pm 30\%$ with respect to a prediction value of a predicted electric power generation amount in a time period in which a degree of confidence (accuracy) of prediction is low. The numerical values illustrated in here are mere examples, and may be other numerical values. Furthermore, an imbalance cost includes, for example, a monetary and non-monetary penalty.

As described above, with the information processing system according to the present embodiment, a usage pattern of electric power is determined to maximize profit based on a current trade price of electric power in each of the plurality of electric power markets DS1 to DSn, a predicted amount of self-consumption of electric power, and a predicted trade price of electric power, allowing each of the users U1 to Um to maximize profit comprehensively through supply and demand of electric power (trade and supply and demand adjustment) including consumption of electric power self-generated by the solar electric power generation device SO, purchase of electric power from another provide, and selling of electric power.

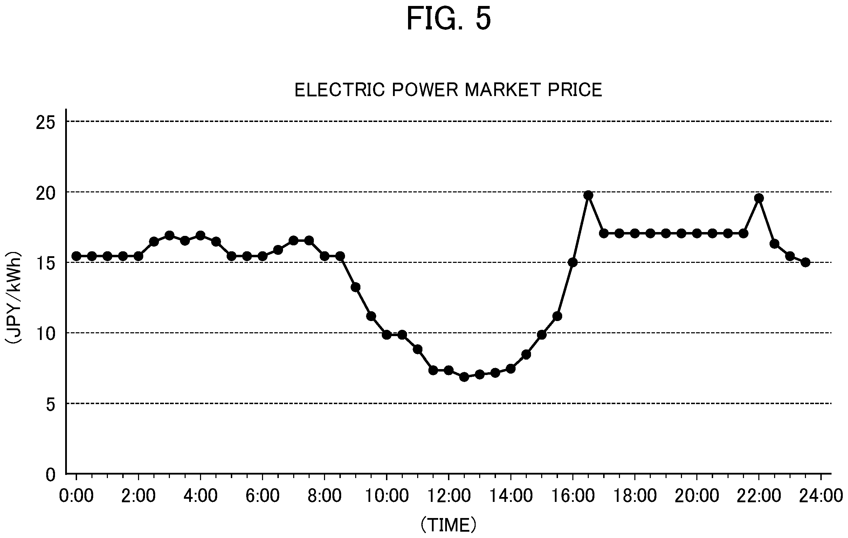

Next, operation of the information processing system according to the present embodiment will now be described herein with reference to FIGs. 5 to 7. The information processing system according to the present embodiment controls electric power for each of the users U1 to Um as described above to make it possible to maximize profit comprehensively for each of the users U1 to Um through supply and demand of electric power (trade and supply and demand adjustment). However, a specific example will now be described herein by exemplifying control of electric power for the user U1 for purposes of description. FIG. 5 is a view illustrating an example of transition of a wholesale price of electric power in one day in a spot market for the information processing system illustrated in FIG. 2. It is assumed, for example, that the user U1 illustrated in FIG. 1 is a company running a warehouse business, and an electric power generation facility (for example, the solar electric power generation device SO having a production capability of 1 MW) illustrated in FIG. 1 has been installed in a warehouse. An expected electric power generation amount in the case of a production capability of 1 MW is approximately 1314000 kWh.

$$(1000 \text{ KW} \times 24 \text{ hours} \times 365 \text{ days} \times 15\% = 1314000 \text{ kWh (/year)})$$

Since, for the user U1, there has been only a usage amount of electric power of 500000 kWh per year, according to past results, it is not possible to fully use generated electric power only through self-consumption, and it is necessary to find another way of using an amount of electric power of approximately 814000 kWh. It has then been determined to use a total amount of electric power of 1314000 kWh (/year) in the form of purchasing electric power when its price is low, storing electric power simultaneously, and selling electric power when its price is high.

A price in a wholesale electric power market greatly changes even within one day. It is assumed that there has been transition of an electric power market price as illustrated in FIG. 5 in a spot market in a day (for example, 2nd of January) in a year (for example, 2022). In this spot market, there has been volatility (a width of price change) ranging from 7 JPY/kWh to 20 JPY/kWh. In this case, the user U1 may be provided with two options described below. One option is that, when no electric power has been stored in advance, for example, electric power is to be stored, instead of self-consumption, for a period of time from 8:00 to 15:30, and, meanwhile, the company itself uses electric power supplied from an electric power company at a fixed price. Another option is that electric power is to be self-consumed for a period of time from 8:00 to 15:30, and electric power is to be sold at a price falling within a price range at and after 16:00.

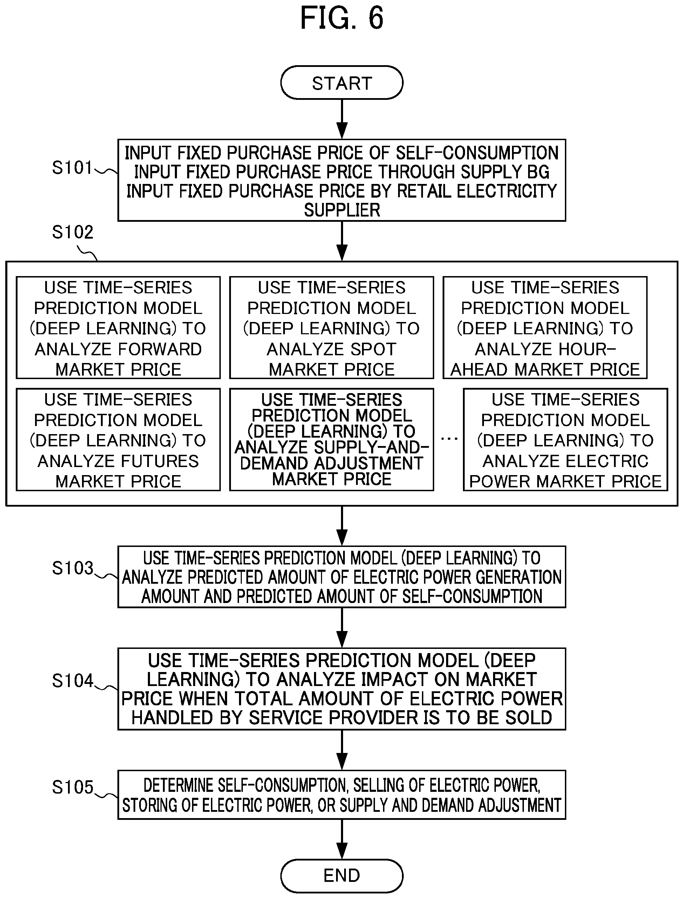

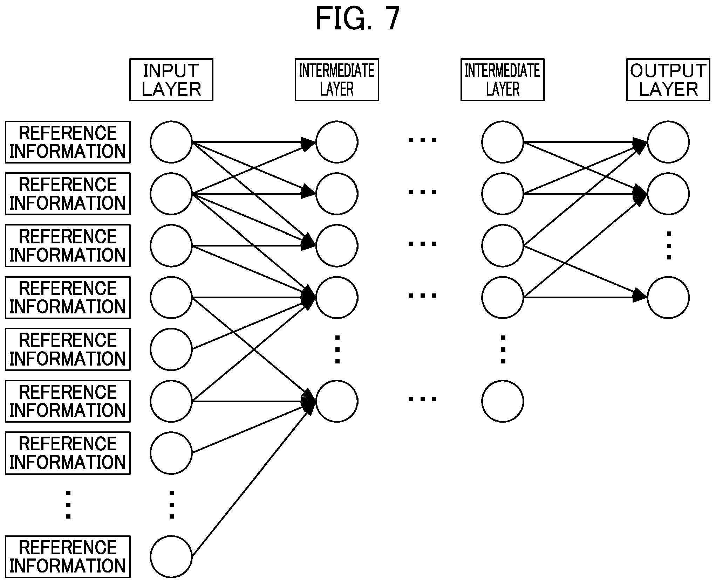

Operation of the information processing system will now be described herein with reference to the flowchart illustrated in FIG. 6 and to FIG. 7. FIG. 6 is a flowchart for allowing the service provider server illustrated in FIG. 4 to perform optimum operation through analysis of markets including the spot market illustrated in FIG. 5. FIG. 7 is a view illustrating an example of an algorithm structure of a time-series prediction model for allowing the service provider server illustrated in FIG. 4 to carry out processing according to the flowchart illustrated in FIG. 6. As illustrated in FIG. 6, when a fixed purchase price of self-consumption, a fixed purchase price through the supply BG, and a fixed purchase price by a retail electricity supplier are inputted in step S101, the electric power usage determination unit 104 uses a time-series prediction model (deep learning) in step S102, analyzes transition of the fixed purchase price of self-consumption, the fixed purchase price through the supply BG, and the fixed purchase price by the retail electricity supplier, and electric power market prices such as a forward market price, a spot market price, an hour-ahead market price, a futures market price, and a supply-and-demand adjustment market price, and determines a usage pattern of electric power in accordance with the transition of a market price in the future. An hour-ahead market has features where there is a continuous trading method where bid prices of individuals are matched in a price-prioritized and time-prioritized manner and a transaction is concluded at any time, and trading of electric power after one hour is allowed, achieving flexible transactions, compared with a spot market. On the other hand, since, in a case of a spot market, it is necessary to perform bidding within a period of time between a day before three days of actual supply and demand to 10 o'clock in a previous day of the actual supply and demand, it is necessary to determine a bid price by taking into account time-series predictions in all markets so far and fluctuation factors (a price of liquefied natural gas (LNG), for example) due to an external environment. Furthermore, since, in the spot market, a single-price auction approach is adopted, and a price is determined every 30 minutes, it is not possible to keep a supply and demand balance if an excessive amount of electric power is sold with respect to a necessary electric power amount, leaving a risk of decrease in price. It is thus necessary to predict transition of a market price in the future by accurately analyzing such concerns.

Next, in step S103, the electric power usage determination unit 104 uses the time-series prediction model (deep learning), analyzes a predicted amount of an electric power generation amount by the solar electric power generation device SO owned by the user U1 and electric power generation facilities owned by the users U2 to Um other than the user U1, predicts and analyzes a predicted amount of self-consumption in the load FK owned by each of the users, and grasps a total amount of an electric power amount for which a usage pattern should be determined in accordance with the transition of a market price in the future.

In step S104, the electric power usage determination unit 104 then uses the time-series prediction model (deep learning) and analyzes an impact to the market prices when a total amount of electric power handled by the service provider SA is to be sold.

In step S105, the electric power usage determination unit 104 further takes into account predictions of electric power generation amounts from the electric power generation facilities owned by the users U1 to Um to which the service provider SA provides the present service and predictions of demand for self-consumption, and determines an appropriate usage pattern of electric power in accordance with each situation from among self-consumption, selling of electric power, storing of electric power, and supply and demand adjustment by each of the users U1 to Um.

The time-series prediction model used in the processing illustrated in FIG. 6 described above includes, as an example, as illustrated in FIG. 7, for example, an input layer into which pieces of reference information are to be inputted, two intermediate layers, and an output layer that outputs a result of machine learning by the intermediate layers. Using the plurality of intermediate layers makes it possible to achieve deep machine learning.

Although there is a case where transaction is allowed by performing optimization in a unit of one day, there are other features where, for example, a price may easily increase on Wednesday and may easily decrease on Sunday (since no factory is operating). Therefore, it is possible to take an approach that not only implements operation in a unit of one day, but also aims at optimum operation in each range such as three days, one week, two weeks, one month, or three months, and it is assumed that an operation policy largely differs from period to period (in particular, a method of using an electric power storage device, for example). On this point, it is also possible to select optimum operation in accordance with a setting of a period of time in this information processing system.

Note herein that the user U1 is assumed to use the present service in a way where an amount of electric power of 1314000 kWh (/year) is to be used by combining self-consumption and selling of electric power in a market as optimum operation in a unit of one week.

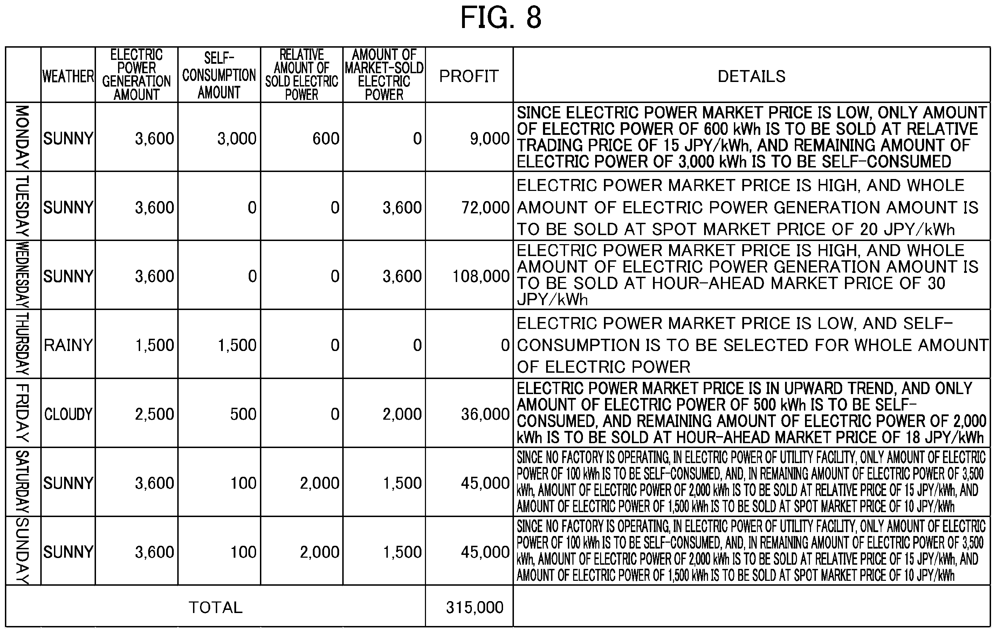

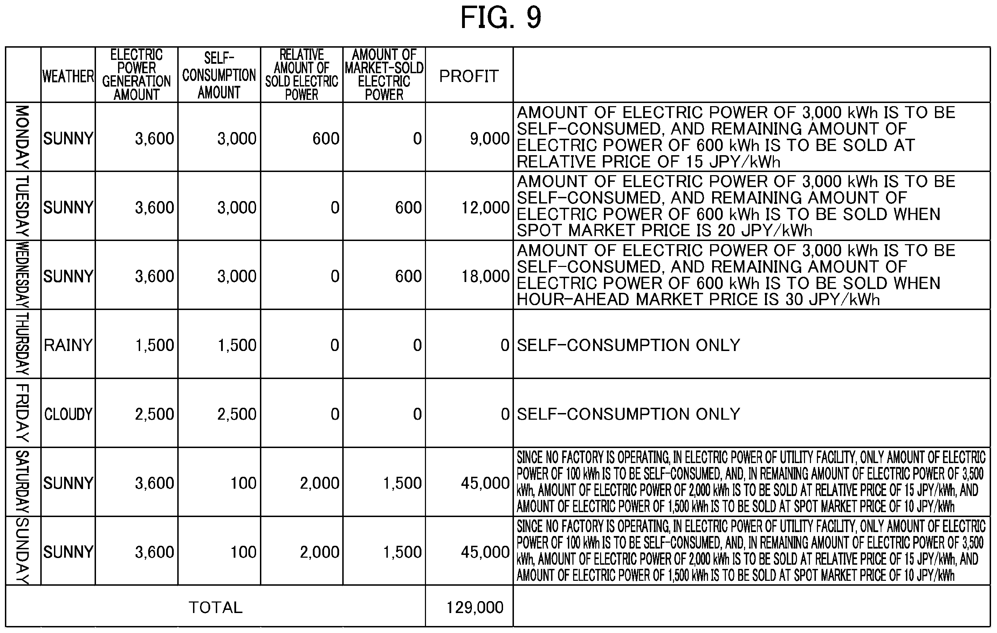

As a result, usage of electric power by the user U1 is controlled based on operation patterns in one week as illustrated in each of FIGs. 8 and 9, which have been determined by the electric power usage determination unit 104. FIG. 8 is a view illustrating an example of operation patterns in one week performed by the service provider server illustrated in FIG. 4. FIG. 9 is a view illustrating another example of operation patterns performed by the service provider server illustrated in FIG. 4, and an example when a user performs operation of prioritizing self-consumption.

For example, as can be seen on Monday in the example illustrated in FIG. 8, it is assumed that there be sunny weather, and an electric power generation amount by the user U1 be 3600 kWh. Since an electric power market price may be low in sunny weather, the electric power usage determination unit 104 has determined a usage pattern (an operation pattern) where an only amount of electric power of 600 kWh is to be sold at a relative trading price of 15 JPY/kWh, and the remaining amount of electric power of 3000 kWh is to be self-consumed. As a result, for the user U1, an electric power generation amount has been 3600 kWh, an amount of electric power self-consumed has been 3000 kWh, a relative amount of sold electric power has been 600 kWh, and profit has been 9000 JPY. After that, operation patterns from Tuesday to Sunday are as illustrated in FIG. 8. As a result, profit for the user U1 in the week from Monday to Sunday is 315000 JPY.

Furthermore, when the user U1 performs operation of prioritizing self-consumption, operation patterns in one week are as illustrated in FIG. 9. However, this is a case where the user U1 is assumed to own a company at a scale where a usage amount of electric power is 3000 kWh/day. In this case, as can be seen on Tuesday in the example illustrated in FIG. 9, it is assumed that there is sunny weather, and an electric power generation amount by the user U1 is 3600 kWh. In this case, the electric power usage determination unit 104 has determined a usage pattern (an operation pattern) where, among an electric power generation amount by the user U1 of 3600 kWh, an amount of electric power of 3000 kWh is to be self-consumed, and the remaining amount of electric power of 600 kWh is to be sold when a spot market price is 20 JPY/kWh. As a result, for the user U1, an electric power generation amount has been 3600 kWh, an amount of electric power self-consumed has been 3000 kWh, an amount of market-sold electric power has been 600 kWh, and profit for that day has been 12000 JPY. In addition, operation patterns from Monday to Sunday are as illustrated in FIG. 9, and, as a result, in the case of operation of prioritizing self-consumption, profit for the user U1 in the week from Monday to Sunday is 129000 JPY.

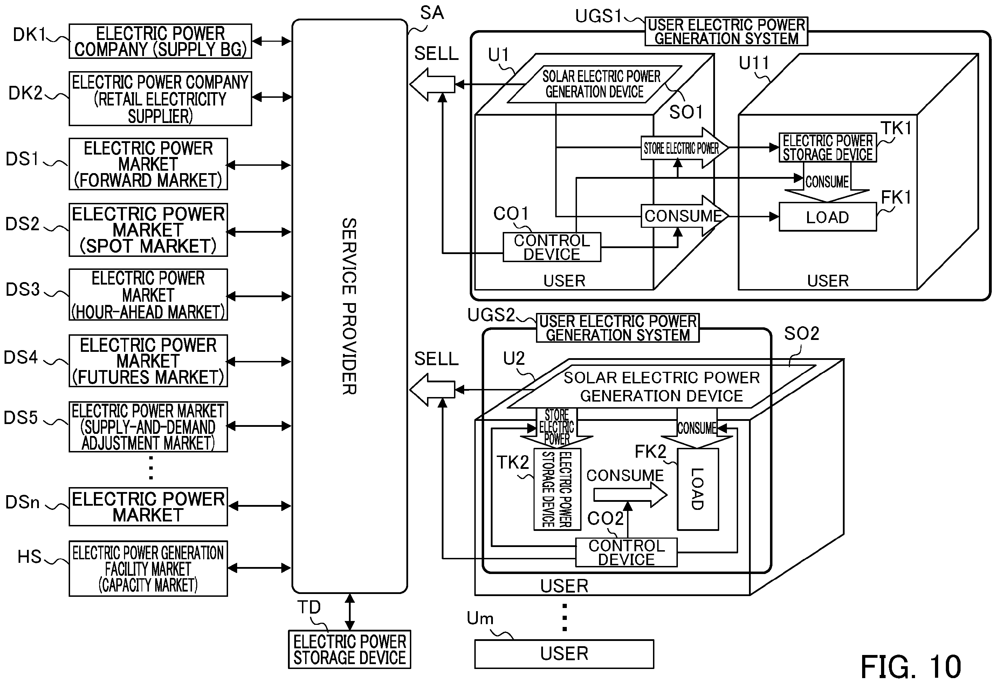

Next, a second service provided by an information processing system including an information processing device according to another embodiment of the present invention will now be described herein with reference to FIGs. 10 to 12. FIG. 10 is a view illustrating an outline of the second service to which the information processing device according to the embodiment of the present invention is applied. Note that a system configuration and a hardware configuration of the service provider server 1, and, furthermore, a functional configuration (relationships among the functional blocks, for example) of the service provider server 1 for achieving the second service are similar or identical to those of the first embodiment, and their descriptions are omitted.

The second service is provided, as illustrated in FIG. 10, from the service provider SA to each of the m number of users U1 to Um (m is an integer value equal to or more than 1). In this second service, the users U1 to Um each run a business of supplying electric power (an electric power supplier), for example. The electric power includes those supplied from electric power suppliers, described later, and recyclable energy generated by each of the users U1 to Um. That is, as the electric power suppliers in the second service, there are the electric power company DK1 having a balancing group, the retail electricity supplier DK2, the n number of electric power markets DS1 to DSn, and the users U1 to Um (n and m are independent integer values equal to or more than 1).

The second service is a service in which the service provider SA serves as a mediator among the electric power suppliers as described above and electric power demanders, that is, the users U1 to Um, "consumption", "trading", "storage", and "supply and demand adjustment" of electric power are combined with each other, and profit for each of the users U1 to Um in production and consumption of electric power and transaction (trading) of electric power is maximized.

The service provider SA mediates production of electric power in each of and transaction of electric power among the users U1 to Um. The service provider SA owns, for this purpose, the electric power storage device TD for storing electric power. The electric power storage device TD absorbs a time lag that occurs in transaction of electric power. By using the electric power storage device TD, it is possible to make a shift between a point in time when electric power has been generated and a point in time when electric power is self-consumed or sold, making it possible to improve profitability as a result. The electric power storage device TD is, for example, an electricity storage battery, a conversion device into a chemical substance such as hydrogen or ammonia, or a battery for an electric vehicle. Although, in this example, the electric power storage device TD exemplified is only one, a plurality of the electric power storage devices TD may be disposed in a dispersed manner, and the electric power storage device TD may be managed by a third party serving as a main management body. That is, for the electric power storage device TD, there is no limitation in number, its disposition, and, furthermore, its main management body.

The user Uk (k is a desired integer value ranging from 1 to m) is an electric power supplier as described above, and runs its own business by supplying electric power demanded by an electric power demander, for example. However, at least some of the users U1 to Um each have a facility that consumes recyclable energy and an electric power storage facility. Examples of the facility that is able to produce recyclable energy include, for example, facilities for solar electric power generation, wind electric power generation, biomass electric power generation, water electric power generation, geothermal electric power generation, wave electric power generation, and pumping-up hydraulic electric power generation.

Specifically, for example, the user U1 owns a user electric power generation system UGS1 for generating electric power based on recyclable energy. The user electric power generation system UGS1 includes a solar electric power generation device SO1, an electric power storage device TK1, and a control device CO1, for example. Furthermore, for example, the user U2 owns a user electric power generation system UGS2 for generating electric power based on recyclable energy. The user electric power generation system UGS2 includes a solar electric power generation device SO2, an electric power storage device TK2, and a control device CO2, for example.

In the user electric power generation system UGS1, for example, electric power generated by the solar electric power generation device SO1 is stored in the electric power storage device TK1, is to be sold, via the service provider SA, to another party (for example, the electric power markets DS1 to DSn, and the electric power companies DK1 and DK2 and another user Up (p is a desired integer value ranging from 2 to m) without interposing these markets), or to be consumed in a load FK1 in a user U11. Note that the same applies to other user electric power generation systems (the user electric power generation system USG2 and onward systems) than the user electric power generation system UGS1.

The control device CO1 controls usage of electric power based on an instruction provided from the service provider SA whether electric power generated by the solar electric power generation device SO1 or electric power stored in the electric power storage device TK1 is allowed to be sold, via the service provider SA, to another party (for example, the electric power markets DS1 to DSn, and the electric power company (supply BG) DK1, the electric power company (retail electricity supplier) DK2, and the other user Up (p is a desired integer value ranging from 2 to m) without interposing these markets), or to be consumed in the load FK1 in the user U11.

Note herein that the load FK1 and a load FK2 are facilities (for example, factories) for running the businesses, for example, of the users U11 and U2. That is, allowing the load FK1 in the user U11 to consume electric power unit providing a power purchase agreement (PPA) service to the user U11 serving as a final demander for the user U1. Furthermore, allowing the load FK2 in the user U2 to consume electric power unit self-consumption for the user U2.

Note that, the PPA service, under which a business operator deploying the present service installs a solar electric power generation device, for example, on a roof of a building, for example, owned by a customer, allows the customer to use electric power with zero carbon dioxide emission and with no initial investment.

Next, operation of the information processing system according to a second embodiment will now be described herein with reference to FIGs. 5 and 10. Note that basic operation in the second embodiment is similar or identical to that in accordance with the flowchart for the operation in the first embodiment illustrated in FIG. 6, and its description is omitted.

Although there is a case where transaction is allowed by performing optimization in a unit of one day, there are other features where, for example, a price may easily increase on Wednesday and may easily decrease on Sunday (since no factory is operating). Therefore, it is possible to take an approach that not only implements operation in a unit of one day, but also aims at optimum operation in each range such as three days, one week, two weeks, one month, or three months, and it is assumed that an operation policy largely differs from period to period (in particular, a method of using an electric power storage device, for example). On this point, it is also possible to select optimum operation in accordance with a setting of a period of time in this information processing system.

Note herein that the user U1 is assumed to use the second service in a way where an amount of electric power of 1314000 kWh (/year) is to be used by combining self-consumption and selling of electric power in a market as optimum operation in a unit of one week.

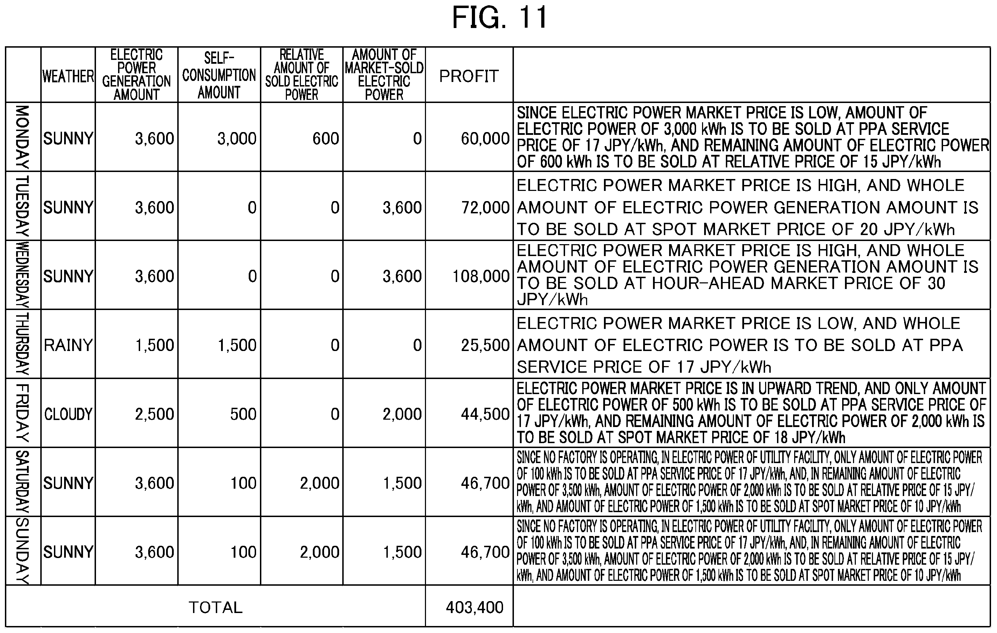

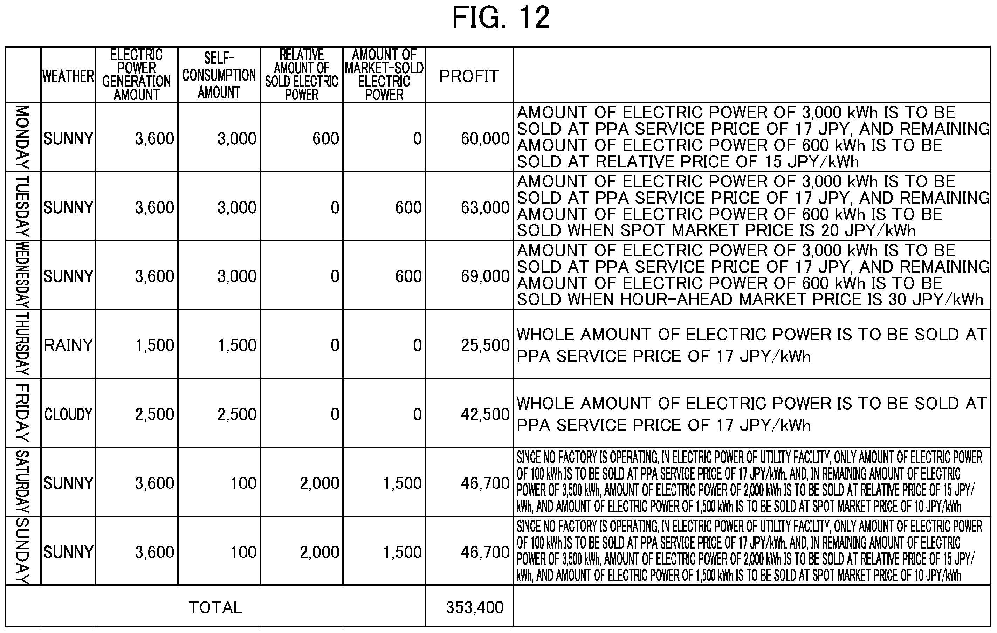

As a result, usage of electric power by the user U1 is controlled based on operation patterns in one week as illustrated in each of FIGs. 11 and 12, which have been determined by the electric power usage determination unit 104. FIG. 11 is a view illustrating an example of operation patterns in one week performed by a service provider server according to the second embodiment. FIG. 12 is a view illustrating another example of operation patterns in one week performed by the service provider server according to the second embodiment, and an example when the user U1 performs operation of prioritizing self-consumption.

For example, as can be seen on Monday in the example illustrated in FIG. 11, it is assumed that there be sunny weather, and an electric power generation amount by the user U1 be 3600 kWh. When optimum operation is to be performed in a unit of a certain period, the electric power usage determination unit 104 has determined a usage pattern (an operation pattern) where an amount of electric power of 3000 kWh is to be sold at a PPA service unit price of 17 JPY/kWh (included in a self-consumption amount in the table illustrated in FIG. 11), and the remaining amount of electric power of 600 kWh is to be sold at a relative trading price of 15 JPY/kWh. As a result, for the user U1, an electric power generation amount has been 3600 kWh, a PPA service amount of sold electric power has been 3000 kWh, a relative amount of sold electric power has been 600 kWh, and, therefore, profit has been 60000 JPY. After that, operation patterns from Tuesday to Sunday are as illustrated in FIG. 11. As a result, profit for the user U1 in the week from Monday to Sunday is 403400 JPY.

Furthermore, when the user U1 prioritizes self-consumption and performs optimum operation in a unit of a certain period, operation patterns in one week are as illustrated in FIG. 12. However, this is a case where the user U1 is assumed to own a company at a scale where a usage amount of electric power is 3000 kWh/day. As can be seen on Saturday in the example illustrated in FIG. 12, for example, since no factory is operating on Saturday, the electric power usage determination unit 104 has determined a usage pattern (an operation pattern) where, in electric power of a utility facility, an only amount of electric power of 100 kWh is to be sold at a PPA service unit price of 17 JPY/kWh, and, in the remaining amount of electric power of 3500 kWh, an amount of electric power of 2000 kWh is to be sold at a relative trading price of 15 JPY/kWh, and the remaining amount of electric power of 1500 kWh is to be sold when a spot market price is 10 JPY/kWh. As a result, for the user U1, an electric power generation amount has been 3600 kWh, a PPA service amount of sold electric power has been 100 kWh, a relative trading amount of sold electric power has been 2000 kWh, an amount of market-sold electric power has been 1500 kWh, and profit based on the amounts has been 46700 JPY. Operation patterns on other weekdays are as illustrated in FIG. 12. As a result, profit for the user U1 in the week from Monday to Sunday is 353400 JPY.

Although the embodiments of the present invention have been described, the present invention is not limited to the embodiments described above. The present invention still includes amendments and modifications, for example, that fall within the scope of the present invention, as long as it is possible to achieve the object of the present invention.

Although the solar electric power generation devices SO have been exemplified in the embodiments described above, there may be another electric power generation device, as long as the device is able to produce recyclable energy. Although, in the embodiments described above, the trade price acquisition unit 101 has acquired, as a current trade price, a current price at which each of the users U1 to Um trades electric power in each of the electric power markets DS1 to DSn, a current trade price may be acquired from another electric power market than these markets, as long as a current price at which each of the users U1 to Um trades electric power in each of the plurality of electric power markets is acquired as a current trade price.

Although, in the embodiments described above, the trade price prediction unit 102 has predicted, as a predicted trade price, a price at which each of the users U1 to Um trades electric power in a future predetermined time period in each of the plurality of electric power markets DS1 to DSn, a predicted trade price in another electric power market than these markets may be predicted, as long as a price at which a user trades electric power in a future predetermined time period in each of a plurality of electric power trade markets is predicted as a predicted trade price.

Although, in the embodiments described above, the electric power usage determination unit 104 has determined a usage pattern of electric power by each of the users U1 to Um based on a current trade price, a predicted amount of self-consumption, a predicted trade price, and a predetermined rule aimed at maximizing profit for each of the users U1 to Um, a usage pattern of electric power by each of the users U1 to Um may be determined using another rule than the predetermined rule (for example, a rule for first maximizing self-consumption of electric power, and then minimizing purchase of electric power) or a parameter or a condition other than a rule.

Furthermore, for example, it is possible to use hardware or software to execute the series of processing described above. In other words, the functional configuration of the service provider server illustrated in FIG. 4 is a mere example, and the present invention is not limited in particular. That is, it is enough that an information processing system has functions that make it possible to wholly execute the series of processing described above. Functional blocks used to realize the functions are not particularly limited to the functional blocks illustrated in the example in Fig. 4. Furthermore, locations at which the functional blocks and the databases of the service provider server are present are not limited in particular to the locations illustrated in FIG. 4, and desired locations may be applied. For example, at least some of the functional blocks and at least part of the databases, which are necessary for executing various types of processing, may be transferred to another information processing device (another server). Instead, functional blocks and databases of another information processing device (another server) may be transferred to the service provider server, for example. Furthermore, a single piece of hardware may configure one functional block. A single piece of software may configure one functional block. A combination of pieces of hardware and software may configure one functional block.

To execute, with software, the series of processing, a program configuring the software is installed into a computer from a network or a recording medium, for example. The computer may be such a computer incorporated in special hardware. Furthermore, the computer may be such a computer installed with various programs used to execute various functions, such as, in addition to servers, general-purpose smart phones and personal computers.

A recording medium storing such programs as described above may not only be a non-illustrated removable medium distributed separately from a device main body to provide the programs to each of the users U1 to Um, for example, but also be a recording medium provided to each of the users U1 to Um, for example, in a state where the recording medium is assembled beforehand in the device main body, for example.

Note that, in the present specification, steps describing programs recorded in a recording medium include not only processes sequentially executed in a chronological order, but also processes that may not necessarily be executed in a chronological order, but may be executed in parallel or separately. Furthermore, in the present specification, the term "system" means a generic device including a plurality of devices and a plurality of means, for example.

In other words, it is sufficient that the information processing device to which the present invention is applied take configurations described below, and the information processing device is able to take various types and forms of embodiments. That is, the information processing device (for example, the service provider server 1 illustrated in FIG. 4) to which the present invention is applied includes

a trade price acquisition unit (for example, the trade price acquisition unit 101 illustrated in FIG. 4) for acquiring, as a current trade price, a current price at which a user (for example, the users U1 to Um illustrated in FIG. 1) trades electric power in each of a plurality of electric power trade markets (for example, the electric power markets DS1 to DSm illustrated in FIG. 1);

a trade price prediction unit (for example, the trade price prediction unit 102 illustrated in FIG. 4) for predicting, as a predicted trade price, a price at which the user (for example, the users U1 to Um illustrated in FIG. 1) trades electric power in a future predetermined time period in each of the plurality of electric power trade markets;

a user consumption prediction unit (for example, the user consumption prediction unit 103 illustrated in FIG. 4) for predicting, as a predicted amount of self-consumption, an electric power amount to be consumed by the user (for example, the users U1 to Um illustrated in FIG. 1) in a future predetermined time period;

an electric power usage determination unit (for example, the electric power usage determination unit 104 illustrated in FIG. 4) for determining a usage pattern of electric power by the user (for example, the users U1 to Um illustrated in FIG. 1) based on the current trade price, the predicted amount of self-consumption, the predicted trade price, and a predetermined rule aimed at maximizing profit for the user (for example, the users U1 to Um illustrated in FIG. 1); and

a control unit (for example, the control unit 105 illustrated in FIG. 4) for controlling (for example, for controlling, as described in the remarks illustrated in FIGs. 7 and 8) usage of electric power by the user (for example, the users U1 to Um illustrated in FIG. 1) based on the usage pattern that has been determined. Thereby, the user (for example, the users U1 to Um illustrated in FIG. 1) is able to maximize profit comprehensively, including consideration of supply and demand and self-consumption of electric power.

The electric power usage determination unit (for example, the electric power usage determination unit 104 illustrated in FIG. 4)

accesses a transaction cost DB (for example, the user information DB 202 illustrated in FIG. 4) in which information of a transaction cost regarding electric power by the user (for example, the users U1 to Um illustrated in FIG. 1) is stored as transaction cost information

to determine the usage pattern further based on the transaction cost information. As described above, determining a usage pattern by taking into account transaction cost information makes it possible to improve accuracy in calculating profit.

The usage pattern includes a pattern for using an electric power storage facility that allows a predetermined electric power storage unit (for example, the storage device TD illustrated in FIG. 4) to store electric power provided from electric power provision sources including the user (for example, the users U1 to Um illustrated in FIG. 1) and the plurality of electric power trade markets (for example, the electric power markets DS1 to DSn illustrated in FIG. 1), and to discharge and provide electric power to electric power provision destinations including the user and the plurality of electric power trade markets. Using the predetermined electric power storage unit (for example, the storage device TD illustrated in FIG. 4) as described above makes it possible to make a shift between a point in time when electric power has been generated and a point in time when electric power is self-consumed or sold, making it possible to improve profitability as a result.

The usage pattern includes a pattern for purchasing and storing, in the electric power storage device (for example, the electric power storage device TD illustrated in FIG. 1), the electric power when the current trade price is a first price in a predetermined electric power trade market (for example, the electric power market (spot market) DS2 illustrated in FIG. 1), and for using, when the predicted trade price is a second price that is higher than the first price, electric power discharged from the electric power storage device (for example, the electric power storage device TD illustrated in FIG. 1) for self-consumption by the user (for example, the users U1 to Um illustrated in FIG. 1) or for selling in at least some of the plurality of electric power trade markets. As described above, setting in advance a first price and a second price and performing transaction of electric power within a price range between the two prices make it possible to secure a stable profit at the transaction prices falling within the price range.

An electric power generation amount prediction unit (for example, the electric power generation amount acquisition unit 106 illustrated in FIG. 4) for acquiring a result of prediction of an electric power generation amount at which electric power is to be generated in a future predetermined time period by an electric power generation facility owned by the user (for example, the users U1 to Um illustrated in FIG. 1), and for calculating, based on the result of the prediction, a predicted electric power generation amount serving as an index to be used for allowing the trade price prediction unit (for example, the trade price prediction unit 102 illustrated in FIG. 4) to predict the predicted trade price and for allowing the electric power usage determination unit (for example, the electric power usage determination unit 104 illustrated in FIG. 4) to determine the usage pattern is further included. As described above, using a predicted electric power generation amount calculated based on a result of prediction of an electric power generation amount generated in a future predetermined time period by an electric power generation facility owned by a user (for example, the users U1 to Um illustrated in FIG. 1), predicting a predicted trade price and determining an electric power usage pattern make it possible to improve accuracy of maximizing profit comprehensively.

The electric power generation amount prediction unit (for example, the electric power generation amount acquisition unit 106 illustrated in FIG. 4) calculates, as the predicted electric power generation amount, a value acquired by multiplying the result of the prediction by a safety factor based on a degree of a width of a confidence interval for the result of prediction (for example, a width of a confidence interval of ±10% with respect to a prediction value of a predicted electric power generation amount in a time period in which a degree of confidence (accuracy) of prediction is high or a width of a confidence interval of ±30% with respect to a prediction value of a predicted electric power generation amount in a time period in which a degree of confidence (accuracy) of prediction is low) and an occurrence possibility of an imbalance cost (for example, a penalty and a monetary penalty). Thereby, it is possible to acquire a predicted electric power generation amount in which safety for preventing an imbalance cost from occurring has been taken into account.

The electric power usage determination unit (for example, the electric power usage determination unit 104 illustrated in FIG. 4) adopts, as the predetermined rule, either a first rule aimed at maximizing profit for the user (for example, the users U1 to Um illustrated in FIG. 1) in each of a plurality of sites (each of factories) or a second rule aimed at maximizing profit for a group including the plurality of sites to determine the usage pattern. Thereby, it is possible to select a usage pattern satisfying a necessary object at that time, among an object of maximizing profit for each of a plurality of sites (each of factories) and an object of maximizing profit for a group including the plurality of sites.

The user consumption prediction unit (for example, the user consumption prediction unit 103 illustrated in FIG. 4) takes into account an operation plan of the user (for example, the users U1 to Um illustrated in FIG. 1) and a result of prediction of future weather to predict the predicted amount of self-consumption. Thereby, since an actual operation plan of a user (for example, the users U1 to Um illustrated in FIG. 1) and a result of prediction of future weather are taken into account for a predicted amount of self-consumption to be predicted, it is possible to highly accurately predict a predicted amount of self-consumption.

The electric power usage determination unit adopts, as the predetermined rule, a rule for prioritizing, based on purchase prices, by the user (for example, the users U1 to Um illustrated in FIG. 1), and durable years of an electric power generation facility and an electric power storage facility, acquisition of profit equivalent to the purchase prices to determine the usage pattern. As described above, adopting, as a predetermined rule, a rule for prioritizing, based on purchase prices, by a user (for example, the users U1 to Um illustrated in FIG. 1), and durable years of an electric power generation facility (for example, the solar electric power generation device SO illustrated in FIG. 1) and an electric power storage facility (for example, the electric power storage device TK illustrated in FIG. 1), acquisition of profit equivalent to the purchase prices makes it possible to prioritize depreciation of the electric power generation facility (for example, the solar electric power generation device SO illustrated in FIG. 1) and the electric power storage facility (for example, the electric power storage device TK illustrated in FIG. 1).

The control unit (for example, the control unit 105 illustrated in FIG. 4) executes, as at least part of control for using electric power by the user (for example, the users U1 to Um illustrated in FIG. 1), control for outputting a storage request to one or more of registered ones as electric power storage facilities capable of storing electric power (for example, the electric power storage device TD illustrated in FIG. 1), the electric power usage determination unit (for example, the electric power usage determination unit 104 illustrated in FIG. 4) determines the usage pattern further based on an electric power storage situation (for example, available battery capacity determined by taking into account a percentage of charged electric power and a lowered capacity situation from initial capacity) in an electric power storage facility (for example, the electric power storage device TD illustrated in FIG. 1) in accordance with the storage request, and

the user consumption prediction unit (for example, the user consumption prediction unit 103 illustrated in FIG. 4) predicts the predicted amount of self-consumption based on the storage request, an operation plan of the user, and a result of prediction of future weather. Thereby, it is possible to maximize profit by taking into account an electric power storage situation in an electric power storage facility (for example, the electric power storage device TD illustrated in FIG. 1) in accordance with a storage request.

An information processing method executed by an information processing device (for example, the service provider server 1 illustrated in FIG. 4) includes:

a trade price acquisition step for acquiring, as a current trade price, a current price at which a user (for example, the users U1 to Um illustrated in FIG. 1) trades electric power in each of a plurality of electric power trade markets (for example, the electric power markets DS1 to DSm illustrated in FIG. 1);

a trade price prediction step for predicting, as a predicted trade price, a price at which the user (for example, the users U1 to Um illustrated in FIG. 1) trades electric power in a future predetermined time period in each of the plurality of electric power trade markets (for example, the electric power markets DS1 to DSm illustrated in FIG. 1);

a user consumption prediction step for predicting, as a predicted amount of self-consumption, an electric power amount to be consumed by the user (for example, the users U1 to Um illustrated in FIG. 1) in a future predetermined time period;

an electric power usage determination step for determining a usage pattern of electric power by the user (for example, the users U1 to Um illustrated in FIG. 1) based on the current trade price, the predicted amount of self-consumption, the predicted trade price, and a predetermined rule aimed at maximizing profit for the user (for example, the users U1 to Um illustrated in FIG. 1); and

a control step for controlling (for example, for controlling, as described in the remarks illustrated in FIGs. 7 and 8) usage of electric power by the user based on the usage pattern that has been determined. Thereby, the user (for example, the users U1 to Um illustrated in FIG. 1) is able to maximize profit comprehensively, including consideration of supply and demand and self-consumption of electric power.

A computer is caused to execute control processing including:

a trade price acquisition step for acquiring, as a current trade price, a current price at which a user (for example, the users U1 to Um illustrated in FIG. 1) trades electric power in each of a plurality of electric power trade markets (for example, the electric power markets DS1 to DSm illustrated in FIG. 1);

a trade price prediction step for predicting, as a predicted trade price, a price at which the user (for example, the users U1 to Um illustrated in FIG. 1) trades electric power in a future predetermined time period in each of the plurality of electric power trade markets (for example, the electric power markets DS1 to DSm illustrated in FIG. 1);

a user consumption prediction step for predicting, as a predicted amount of self-consumption, an electric power amount to be consumed by the user (for example, the users U1 to Um illustrated in FIG. 1) in a future predetermined time period;

an electric power usage determination step for determining a usage pattern of electric power by the user based on the current trade price, the predicted amount of self-consumption, the predicted trade price, and a predetermined rule aimed at maximizing profit for the user (for example, the users U1 to Um illustrated in FIG. 1); and

a control step for controlling (for example, for controlling, as described in the remarks illustrated in FIGs. 7 and 8) usage of electric power by the user (for example, the users U1 to Um illustrated in FIG. 1) based on the usage pattern that has been determined. Thereby, the user (for example, the users U1 to Um illustrated in FIG. 1) is able to maximize profit comprehensively, including consideration of supply and demand and self-consumption of electric power.

EXPLANATION OF REFERENCE NUMERALS

1 Service provider server, 2 Electric power company server, 3-n Electric power market server, 11 CPU, 12 ROM, 13 RAM, 14 Bus, 15 Input-and-output interface, 16 Output unit, 17 Input unit, 18 Storage unit, 19 Communication unit, 101 Trade price acquisition unit, 102 Trade price prediction unit, 103 User consumption prediction unit, 104 Electric power usage determination unit, 105 Control unit, 106 Electric power generation amount acquisition unit, 201 Electric power information DB, 202 User information DB

**Claims**

1. An information processing device comprising:

   a trade price acquisition unit for acquiring, as a current trade price, a current price at which a user trades electric power in each of a plurality of electric power trade markets;
   a trade price prediction unit for predicting, as a predicted trade price, a price at which the user trades electric power in a future predetermined time period in each of the plurality of electric power trade markets;
   a user consumption prediction unit for predicting, as a predicted amount of self-consumption, an electric power amount to be consumed by the user in a future predetermined time period;
   an electric power usage determination unit for determining a usage pattern of electric power by the user based on the current trade price, the predicted amount of self-consumption, the predicted trade price, and a predetermined rule aimed at maximizing profit for the user; and
   a control unit for controlling usage of electric power by the user based on the usage pattern that has been determined.

2. The information processing device according to claim 1, wherein the electric power usage determination unit accesses a transaction cost database (DB) in which information of a transaction cost regarding electric power by the user is stored as transaction cost information
   to determine the usage pattern further based on the transaction cost.

3. The information processing device according to claim 1 or 2, wherein the usage pattern

includes a pattern for using an electric power storage facility that allows a predetermined electric power storage unit to store electric power provided from electric power provision sources including the user and the plurality of electric power trade markets, and to discharge and provide electric power to electric power provision destinations including the user and the plurality of electric power trade markets.

4.  The information processing device according to claim 3, wherein the usage pattern includes a pattern for purchasing and storing, in the electric power storage facility, the electric power when the current trade price is a first price in a predetermined electric power trade market, and for using, when the predicted trade price is a second price that is higher than the first price, electric power discharged from the electric power storage device for self-consumption by the user or for selling in at least some of the plurality of electric power trade markets.

5.  The information processing device according to any one of claims 1 to 4, further comprising an electric power generation amount prediction unit for acquiring a result of prediction of an electric power generation amount at which electric power is to be generated in a future predetermined time period by an electric power generation facility owned by the user, and for calculating, based on the result of the prediction, a predicted electric power generation amount serving as an index to be used for allowing the trade price prediction unit to predict the predicted trade price and for allowing the electric power usage determination unit to determine the usage pattern.

6.  The information processing device according to claim 5, wherein the electric power generation amount prediction unit calculates, as the predicted electric power generation amount, a value acquired by multiplying the result of the prediction by a safety factor based on a degree of a width of a confidence interval for the result of prediction and an occurrence possibility of an imbalance cost.

7.  The information processing device according to any one of claims 1 to 6, wherein the electric power usage determination unit adopts, as the predetermined rule, either a first rule aimed at maximizing profit for the user in each of a plurality of sites or a second rule aimed at maximizing profit for a group including the plurality of sites to determine the usage pattern.

8.  The information processing device according to any one of claims 1 to 7, wherein the user consumption prediction unit takes into account an operation plan of the user and a result of prediction of future weather to predict the predicted amount of self-consumption.

9.  The information processing device according to any one of claims 1 to 8, wherein the electric power usage determination unit
adopts, as the predetermined rule, a rule for prioritizing, based on purchase prices, by the user, and durable years of an electric power generation facility and an electric power storage facility, acquisition of profit equivalent to the purchase prices to determine the usage pattern.

10. The information processing device according to any one of claims 1 to 9, wherein the control unit

    executes, as at least part of control for using electric power by the user, control for outputting a storage request to one or more of registered ones as electric power storage facilities capable of storing electric power,
    the electric power usage determination unit determines the usage pattern further based on an electric power storage situation in an electric power storage facility in accordance with the storage request, and
    the user consumption prediction unit predicts the predicted amount of self-consumption based on the storage request, an operation plan of the user, and a result of prediction of future weather.

11. An information processing method executed by an information processing device, the information processing method comprising:

    a trade price acquisition step for acquiring, as a current trade price, a current price at which a user trades electric power in each of a plurality of electric power trade markets;
    a trade price prediction step for predicting, as a predicted trade price, a price at which the user trades electric power in a future predetermined time period in each of the plurality of electric power trade markets;
    a user consumption prediction step for predicting, as a predicted amount of self-consumption, an electric power amount to be consumed by the user in a future predetermined time period;
    an electric power usage determination step for determining a usage pattern of electric power by the user based on the current trade price, the predicted amount of self-consumption, the predicted trade price, and a predetermined rule aimed at maximizing profit for the user; and

a control step for controlling usage of electric power by the user based on the usage pattern that has been determined.

**12.** A program for causing a computer to execute control processing comprising:

a trade price acquisition step for acquiring, as a current trade price, a current price at which a user trades electric power in each of a plurality of electric power trade markets;

a trade price prediction step for predicting, as a predicted trade price, a price at which the user trades electric power in a future predetermined time period in each of the plurality of electric power trade markets;

a user consumption prediction step for predicting, as a predicted amount of self-consumption, an electric power amount to be consumed by the user in a future predetermined time period;

an electric power usage determination step for determining a usage pattern of electric power by the user based on the current trade price, the predicted amount of self-consumption, the predicted trade price, and a predetermined rule aimed at maximizing profit for the user; and

a control step for controlling usage of electric power by the user based on the usage pattern that has been determined.

**FIG. 1**

SA — SERVICE PROVIDER

UGS — USER ELECTRIC POWER GENERATION SYSTEM

U1 — USER ELECTRIC POWER GENERATION SYSTEM
SO — SOLAR ELECTRIC POWER GENERATION DEVICE
FK — LOAD
CONSUME
TK — ELECTRIC POWER STORAGE DEVICE
SELL
CO — CONTROL DEVICE

Um — USER

TD — ELECTRIC POWER STORAGE DEVICE

DK1 — ELECTRIC POWER COMPANY (SUPPLY BG)
DK2 — ELECTRIC POWER COMPANY (RETAIL ELECTRICITY SUPPLIER)
DS1 — ELECTRIC POWER MARKET (FORWARD MARKET)
DS2 — ELECTRIC POWER MARKET (SPOT MARKET)
DS3 — ELECTRIC POWER MARKET (HOUR-AHEAD MARKET)
DS4 — ELECTRIC POWER MARKET (FUTURES MARKET)
DS5 — ELECTRIC POWER MARKET (SUPPLY-AND-DEMAND ADJUSTMENT MARKET)
DSn — ELECTRIC POWER MARKET
HS — ELECTRIC POWER GENERATION FACILITY MARKET (CAPACITY MARKET)

# FIG. 2

1 SERVICE PROVIDER SERVER

NW

2-1 ELECTRIC POWER COMPANY SERVER (SUPPLY BG)

2-2 ELECTRIC POWER COMPANY SERVER (RETAIL ELECTRICITY SUPPLIER)

3-1 ELECTRIC POWER MARKET SERVER (FORWARD MARKET)

3-2 ELECTRIC POWER MARKET SERVER (SPOT MARKET)

3-3 ELECTRIC POWER MARKET SERVER (HOUR-AHEAD MARKET)

3-4 ELECTRIC POWER MARKET SERVER (FUTURES MARKET)

3-5 ELECTRIC POWER MARKET SERVER (SUPPLY-AND-SUPPLY-AND-DEMAND ADJUSTMENT MARKET)

3-n ELECTRIC POWER MARKET SERVER

4 ELECTRIC POWER GENERATION FACILITY MARKET SERVER (CAPACITY MARKET)

NETWORK

UGS-1 USER ELECTRIC POWER GENERATION SYSTEM

UGS-m USER ELECTRIC POWER GENERATION SYSTEM

## FIG. 3

SERVICE PROVIDER SERVER — 1

CPU (11) · ROM (12) · RAM (13)

14

INPUT-AND-OUTPUT INTERFACE (15)

OUTPUT UNIT (16) · INPUT UNIT (17) · STORAGE UNIT (18) · COMMUNICATION UNIT (19) · DRIVE (20)

REMOVABLE MEDIUM (21)

EP 4 485 337 A1

# FIG. 4

ELECTRIC POWER COMPANY SERVER — 2

ELECTRIC POWER MARKET SERVER — 3

ELECTRIC POWER GENERATION FACILITY MARKET SERVER — 4

UGS

USER ELECTRIC POWER GENERATION SYSTEM

TK — ELECTRIC POWER STORAGE DEVICE

TD — ELECTRIC POWER STORAGE DEVICE

1 — SERVICE PROVIDER SERVER

19 — COMMUNICATION UNIT

11 — CPU

101 — TRADE PRICE ACQUISITION UNIT

102 — TRADE PRICE PREDICTION UNIT

103 — USER CONSUMPTION PREDICTION UNIT

104 — ELECTRIC POWER USAGE DETERMINATION UNIT

105 — CONTROL UNIT

106 — ELECTRIC POWER GENERATION AMOUNT ACQUISITION UNIT

18 — STORAGE UNIT

201 — ELECTRIC POWER INFORMATION DB

202 — USER INFORMATION DB (TRANSACTION COST, FOR EXAMPLE)

EP 4 485 337 A1

# FIG. 5

ELECTRIC POWER MARKET PRICE

EP 4 485 337 A1

# FIG. 6

START

S101 — INPUT FIXED PURCHASE PRICE OF SELF-CONSUMPTION
INPUT FIXED PURCHASE PRICE THROUGH SUPPLY BG
INPUT FIXED PURCHASE PRICE BY RETAIL ELECTRICITY
SUPPLIER

S102

| USE TIME-SERIES PREDICTION MODEL (DEEP LEARNING) TO ANALYZE FORWARD MARKET PRICE | USE TIME-SERIES PREDICTION MODEL (DEEP LEARNING) TO ANALYZE SPOT MARKET PRICE | USE TIME-SERIES PREDICTION MODEL (DEEP LEARNING) TO ANALYZE HOUR-AHEAD MARKET PRICE |
|---|---|---|
| USE TIME-SERIES PREDICTION MODEL (DEEP LEARNING) TO ANALYZE FUTURES MARKET PRICE | USE TIME-SERIES PREDICTION MODEL (DEEP LEARNING) TO ANALYZE SUPPLY-AND-DEMAND ADJUSTMENT MARKET PRICE · · · | USE TIME-SERIES PREDICTION MODEL (DEEP LEARNING) TO ANALYZE ELECTRIC POWER MARKET PRICE |

S103 — USE TIME-SERIES PREDICTION MODEL (DEEP LEARNING) TO
ANALYZE PREDICTED AMOUNT OF ELECTRIC POWER GENERATION
AMOUNT AND PREDICTED AMOUNT OF SELF-CONSUMPTION

S104 — USE TIME-SERIES PREDICTION MODEL (DEEP
LEARNING) TO ANALYZE IMPACT ON MARKET
PRICE WHEN TOTAL AMOUNT OF ELECTRIC POWER
HANDLED BY SERVICE PROVIDER IS TO BE SOLD

S105 — DETERMINE SELF-CONSUMPTION, SELLING OF ELECTRIC POWER,
STORING OF ELECTRIC POWER, OR SUPPLY AND DEMAND ADJUSTMENT

END

# FIG. 7

INPUT LAYER

INTERMEDIATE LAYER

INTERMEDIATE LAYER

OUTPUT LAYER

REFERENCE INFORMATION

REFERENCE INFORMATION

REFERENCE INFORMATION

REFERENCE INFORMATION

REFERENCE INFORMATION

REFERENCE INFORMATION

REFERENCE INFORMATION

REFERENCE INFORMATION

EP 4 485 337 A1

## FIG. 8

| | WEATHER | ELECTRIC POWER GENERATION AMOUNT | SELF-CONSUMPTION AMOUNT | RELATIVE AMOUNT OF SOLD ELECTRIC POWER | AMOUNT OF MARKET-SOLD ELECTRIC POWER | PROFIT | DETAILS |
|---|---|---|---|---|---|---|---|
| MONDAY | SUNNY | 3,600 | 3,000 | 600 | 0 | 9,000 | SINCE ELECTRIC POWER MARKET PRICE IS LOW, ONLY AMOUNT OF ELECTRIC POWER OF 600 kWh IS TO BE SOLD AT RELATIVE TRADING PRICE OF 15 JPY/kWh, AND REMAINING AMOUNT OF ELECTRIC POWER OF 3,000 kWh IS TO BE SELF-CONSUMED |
| TUESDAY | SUNNY | 3,600 | 0 | 0 | 3,600 | 72,000 | ELECTRIC POWER MARKET PRICE IS HIGH, AND WHOLE AMOUNT OF ELECTRIC POWER GENERATION AMOUNT IS TO BE SOLD AT SPOT MARKET PRICE OF 20 JPY/kWh |
| WEDNESDAY | SUNNY | 3,600 | 0 | 0 | 3,600 | 108,000 | ELECTRIC POWER MARKET PRICE IS HIGH, AND WHOLE AMOUNT OF ELECTRIC POWER GENERATION AMOUNT IS TO BE SOLD AT HOUR-AHEAD MARKET PRICE OF 30 JPY/kWh |
| THURSDAY | RAINY | 1,500 | 1,500 | 0 | 0 | 0 | ELECTRIC POWER MARKET PRICE IS LOW, AND SELF-CONSUMPTION IS TO BE SELECTED FOR WHOLE AMOUNT OF ELECTRIC POWER |
| FRIDAY | CLOUDY | 2,500 | 500 | 0 | 2,000 | 36,000 | ELECTRIC POWER MARKET PRICE IS IN UPWARD TREND, AND ONLY AMOUNT OF ELECTRIC POWER OF 500 kWh IS TO BE SELF-CONSUMED, AND REMAINING AMOUNT OF ELECTRIC POWER OF 2,000 kWh IS TO BE SOLD AT HOUR-AHEAD MARKET PRICE OF 18 JPY/kWh |
| SATURDAY | SUNNY | 3,600 | 100 | 2,000 | 1,500 | 45,000 | SINCE NO FACTORY IS OPERATING, IN ELECTRIC POWER OF UTILITY FACILITY, ONLY AMOUNT OF ELECTRIC POWER OF 100 kWh IS TO BE SELF-CONSUMED, AND, IN REMAINING AMOUNT OF ELECTRIC POWER OF 3,500 kWh, AMOUNT OF ELECTRIC POWER OF 2,000 kWh IS TO BE SOLD AT RELATIVE PRICE OF 15 JPY/kWh, AND AMOUNT OF ELECTRIC POWER OF 1,500 kWh IS TO BE SOLD AT SPOT MARKET PRICE OF 10 JPY/kWh |
| SUNDAY | SUNNY | 3,600 | 100 | 2,000 | 1,500 | 45,000 | SINCE NO FACTORY IS OPERATING, IN ELECTRIC POWER OF UTILITY FACILITY, ONLY AMOUNT OF ELECTRIC POWER OF 100 kWh IS TO BE SELF-CONSUMED, AND, IN REMAINING AMOUNT OF ELECTRIC POWER OF 3,500 kWh, AMOUNT OF ELECTRIC POWER OF 2,000 kWh IS TO BE SOLD AT RELATIVE PRICE OF 15 JPY/kWh, AND AMOUNT OF ELECTRIC POWER OF 1,500 kWh IS TO BE SOLD AT SPOT MARKET PRICE OF 10 JPY/kWh |
| TOTAL | | | | | | 315,000 | |

EP 4 485 337 A1

# FIG. 9

| | WEATHER | ELECTRIC POWER GENERATION AMOUNT | SELF-CONSUMPTION AMOUNT | RELATIVE AMOUNT OF SOLD ELECTRIC POWER | AMOUNT OF MARKET-SOLD ELECTRIC POWER | PROFIT | |
|---|---|---|---|---|---|---|---|
| MONDAY | SUNNY | 3,600 | 3,000 | 600 | 0 | 9,000 | AMOUNT OF ELECTRIC POWER OF 3,000 kWh IS TO BE SELF-CONSUMED, AND REMAINING AMOUNT OF ELECTRIC POWER OF 600 kWh IS TO BE SOLD AT RELATIVE PRICE OF 15 JPY/kWh |
| TUESDAY | SUNNY | 3,600 | 3,000 | 0 | 600 | 12,000 | AMOUNT OF ELECTRIC POWER OF 3,000 kWh IS TO BE SELF-CONSUMED, AND REMAINING AMOUNT OF ELECTRIC POWER OF 600 kWh IS TO BE SOLD WHEN SPOT MARKET PRICE IS 20 JPY/kWh |
| WEDNESDAY | SUNNY | 3,600 | 3,000 | 0 | 600 | 18,000 | AMOUNT OF ELECTRIC POWER OF 3,000 kWh IS TO BE SELF-CONSUMED, AND REMAINING AMOUNT OF ELECTRIC POWER OF 600 kWh IS TO BE SOLD WHEN HOUR-AHEAD MARKET PRICE IS 30 JPY/kWh |
| THURSDAY | RAINY | 1,500 | 1,500 | 0 | 0 | 0 | SELF-CONSUMPTION ONLY |
| FRIDAY | CLOUDY | 2,500 | 2,500 | 0 | 0 | 0 | SELF-CONSUMPTION ONLY |
| SATURDAY | SUNNY | 3,600 | 100 | 2,000 | 1,500 | 45,000 | SINCE NO FACTORY IS OPERATING, IN ELECTRIC POWER OF UTILITY FACILITY, ONLY AMOUNT OF ELECTRIC POWER OF 100 kWh IS TO BE SELF-CONSUMED, AND, IN REMAINING AMOUNT OF ELECTRIC POWER OF 3,500 kWh, AMOUNT OF ELECTRIC POWER OF 2,000 kWh IS TO BE SOLD AT RELATIVE PRICE OF 15 JPY/kWh, AND AMOUNT OF ELECTRIC POWER OF 1,500 kWh IS TO BE SOLD AT SPOT MARKET PRICE OF 10 JPY/kWh |
| SUNDAY | SUNNY | 3,600 | 100 | 2,000 | 1,500 | 45,000 | SINCE NO FACTORY IS OPERATING, IN ELECTRIC POWER OF UTILITY FACILITY, ONLY AMOUNT OF ELECTRIC POWER OF 100 kWh IS TO BE SELF-CONSUMED, AND, IN REMAINING AMOUNT OF ELECTRIC POWER OF 3,500 kWh, AMOUNT OF ELECTRIC POWER OF 2,000 kWh IS TO BE SOLD AT RELATIVE PRICE OF 15 JPY/kWh, AND AMOUNT OF ELECTRIC POWER OF 1,500 kWh IS TO BE SOLD AT SPOT MARKET PRICE OF 10 JPY/kWh |
| TOTAL | | | | | | 129,000 | |

EP 4 485 337 A1

FIG. 10

EP 4 485 337 A1

# FIG. 11

| | WEATHER | ELECTRIC POWER GENERATION AMOUNT | SELF-CONSUMPTION AMOUNT | RELATIVE AMOUNT OF SOLD ELECTRIC POWER | AMOUNT OF MARKET-SOLD ELECTRIC POWER | PROFIT | |
|---|---|---|---|---|---|---|---|
| MONDAY | SUNNY | 3,600 | 3,000 | 600 | 0 | 60,000 | SINCE ELECTRIC POWER MARKET PRICE IS LOW, AMOUNT OF ELECTRIC POWER OF 3,000 kWh IS TO BE SOLD AT PPA SERVICE PRICE OF 17 JPY/kWh, AND REMAINING AMOUNT OF ELECTRIC POWER OF 600 kWh IS TO BE SOLD AT RELATIVE PRICE OF 15 JPY/kWh |
| TUESDAY | SUNNY | 3,600 | 0 | 0 | 3,600 | 72,000 | ELECTRIC POWER MARKET PRICE IS HIGH, AND WHOLE AMOUNT OF ELECTRIC POWER GENERATION AMOUNT IS TO BE SOLD AT SPOT MARKET PRICE OF 20 JPY/kWh |
| WEDNESDAY | SUNNY | 3,600 | 0 | 0 | 3,600 | 108,000 | ELECTRIC POWER MARKET PRICE IS HIGH, AND WHOLE AMOUNT OF ELECTRIC POWER GENERATION AMOUNT IS TO BE SOLD AT HOUR-AHEAD MARKET PRICE OF 30 JPY/kWh |
| THURSDAY | RAINY | 1,500 | 1,500 | 0 | 0 | 25,500 | ELECTRIC POWER MARKET PRICE IS LOW, AND WHOLE AMOUNT OF ELECTRIC POWER IS TO BE SOLD AT PPA SERVICE PRICE OF 17 JPY/kWh |
| FRIDAY | CLOUDY | 2,500 | 500 | 0 | 2,000 | 44,500 | ELECTRIC POWER MARKET PRICE IS IN UPWARD TREND, AND ONLY AMOUNT OF ELECTRIC POWER OF 500 kWh IS TO BE SOLD AT PPA SERVICE PRICE OF 17 JPY/kWh, AND REMAINING AMOUNT OF ELECTRIC POWER OF 2,000 kWh IS TO BE SOLD AT SPOT MARKET PRICE OF 18 JPY/kWh |
| SATURDAY | SUNNY | 3,600 | 100 | 2,000 | 1,500 | 46,700 | SINCE NO FACTORY IS OPERATING, IN ELECTRIC POWER OF UTILITY FACILITY, ONLY AMOUNT OF ELECTRIC POWER OF 100 kWh IS TO BE SOLD AT PPA SERVICE PRICE OF 17 JPY/kWh, AND, IN REMAINING AMOUNT OF ELECTRIC POWER OF 3,500 kWh, AMOUNT OF ELECTRIC POWER OF 2,000 kWh IS TO BE SOLD AT RELATIVE PRICE OF 15 JPY/kWh, AND AMOUNT OF ELECTRIC POWER OF 1,500 kWh IS TO BE SOLD AT SPOT MARKET PRICE OF 10 JPY/kWh |
| SUNDAY | SUNNY | 3,600 | 100 | 2,000 | 1,500 | 46,700 | SINCE NO FACTORY IS OPERATING, IN ELECTRIC POWER OF UTILITY FACILITY, ONLY AMOUNT OF ELECTRIC POWER OF 100 kWh IS TO BE SOLD AT PPA SERVICE PRICE OF 17 JPY/kWh, AND, IN REMAINING AMOUNT OF ELECTRIC POWER OF 3,500 kWh, AMOUNT OF ELECTRIC POWER OF 2,000 kWh IS TO BE SOLD AT RELATIVE PRICE OF 15 JPY/kWh, AND AMOUNT OF ELECTRIC POWER OF 1,500 kWh IS TO BE SOLD AT SPOT MARKET PRICE OF 10 JPY/kWh |
| TOTAL | | | | | | 403,400 | |

EP 4 485 337 A1

## FIG. 12

| | WEATHER | ELECTRIC POWER GENERATION AMOUNT | SELF-CONSUMPTION AMOUNT | RELATIVE AMOUNT OF SOLD ELECTRIC POWER | AMOUNT OF MARKET-SOLD ELECTRIC POWER | PROFIT | |
|---|---|---|---|---|---|---|---|
| MONDAY | SUNNY | 3,600 | 3,000 | 600 | 0 | 60,000 | AMOUNT OF ELECTRIC POWER OF 3,000 kWh IS TO BE SOLD AT PPA SERVICE PRICE OF 17 JPY, AND REMAINING AMOUNT OF ELECTRIC POWER OF 600 kWh IS TO BE SOLD AT RELATIVE PRICE OF 15 JPY/kWh |
| TUESDAY | SUNNY | 3,600 | 3,000 | 0 | 600 | 63,000 | AMOUNT OF ELECTRIC POWER OF 3,000 kWh IS TO BE SOLD AT PPA SERVICE PRICE OF 17 JPY, AND REMAINING AMOUNT OF ELECTRIC POWER OF 600 kWh IS TO BE SOLD WHEN SPOT MARKET PRICE IS 20 JPY/kWh |
| WEDNESDAY | SUNNY | 3,600 | 3,000 | 0 | 600 | 69,000 | AMOUNT OF ELECTRIC POWER OF 3,000 kWh IS TO BE SOLD AT PPA SERVICE PRICE OF 17 JPY, AND REMAINING AMOUNT OF ELECTRIC POWER OF 600 kWh IS TO BE SOLD WHEN HOUR-AHEAD MARKET PRICE IS 30 JPY/kWh |
| THURSDAY | RAINY | 1,500 | 1,500 | 0 | 0 | 25,500 | WHOLE AMOUNT OF ELECTRIC POWER IS TO BE SOLD AT PPA SERVICE PRICE OF 17 JPY/kWh |
| FRIDAY | CLOUDY | 2,500 | 2,500 | 0 | 0 | 42,500 | WHOLE AMOUNT OF ELECTRIC POWER IS TO BE SOLD AT PPA SERVICE PRICE OF 17 JPY/kWh |
| SATURDAY | SUNNY | 3,600 | 100 | 2,000 | 1,500 | 46,700 | SINCE NO FACTORY IS OPERATING, IN ELECTRIC POWER OF UTILITY FACILITY, ONLY AMOUNT OF ELECTRIC POWER OF 100 kWh IS TO BE SOLD AT PPA SERVICE PRICE OF 17 JPY/kWh, AND, IN REMAINING AMOUNT OF ELECTRIC POWER OF 3,500 kWh, AMOUNT OF ELECTRIC POWER OF 2,000 kWh IS TO BE SOLD AT RELATIVE PRICE OF 15 JPY/kWh, AND AMOUNT OF ELECTRIC POWER OF 1,500 kWh IS TO BE SOLD AT SPOT MARKET PRICE OF 10 JPY/kWh |
| SUNDAY | SUNNY | 3,600 | 100 | 2,000 | 1,500 | 46,700 | SINCE NO FACTORY IS OPERATING, IN ELECTRIC POWER OF UTILITY FACILITY, ONLY AMOUNT OF ELECTRIC POWER OF 100 kWh IS TO BE SOLD AT PPA SERVICE PRICE OF 17 JPY/kWh, AND, IN REMAINING AMOUNT OF ELECTRIC POWER OF 3,500 kWh, AMOUNT OF ELECTRIC POWER OF 2,000 kWh IS TO BE SOLD AT RELATIVE PRICE OF 15 JPY/kWh, AND AMOUNT OF ELECTRIC POWER OF 1,500 kWh IS TO BE SOLD AT SPOT MARKET PRICE OF 10 JPY/kWh |
| TOTAL | | | | | | 353,400 | |

## INTERNATIONAL SEARCH REPORT

International application No.

**PCT/JP2023/004917**

### A. CLASSIFICATION OF SUBJECT MATTER

***G06Q 50/06***(2012.01)i; ***G06Q 10/04***(2023.01)i

FI: G06Q50/06; G06Q10/04

According to International Patent Classification (IPC) or to both national classification and IPC

### B. FIELDS SEARCHED

Minimum documentation searched (classification system followed by classification symbols)

G06Q50/06; G06Q10/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2012-053721 A (HITACHI, LTD.) 15 March 2012 (2012-03-15) abstract, paragraphs [0017]-[0021] | 1-5, 7-12 |
| A | abstract, paragraphs [0017]-[0021] | 6 |
| Y | JP 2021-151185 A (MITSUBISHI ELECTRIC CORP.) 27 September 2021 (2021-09-27) claim 9 | 1-5, 7-12 |
| A | claim 9 | 6 |
| Y | JP 2020-43634 A (TOYOTA CENTRAL R&D LABS., INC.) 19 March 2020 (2020-03-19) abstract, claims 2-3, paragraphs [0016], [0029] | 7, 9-10 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 April 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/004917**

| Patent document cited in search report | | | Publication date (day/month/year) | Patent family member(s) | | | Publication date (day/month/year) |
|---|---|---|---|---|---|---|---|
| JP | 2012-053721 | A | 15 March 2012 | (Family: none) | | | |
| JP | 2021-151185 | A | 27 September 2021 | US 2021/0304306 A1 claim 9 | | | |
| JP | 2020-43634 | A | 19 March 2020 | (Family: none) | | | |

Form PCT/ISA/210 (patent family annex) (January 2015)

**REFERENCES CITED IN THE DESCRIPTION**

**Patent documents cited in the description**

- JP 2021136832 A

- JP 2021174344 A